# EUROPÄISCHE PATENTSCHRIFT

(11) **EP 0 718 176 B1**
(45) Veröffentlichungstag und Bekanntmachung des Hinweises auf die Patenterteilung: **26.03.1997**
(21) Anmeldenummer: 95117769.0
(22) Anmeldetag: 11.11.1995
(51) Int. Cl.: B62D 33/06, B60R 19/42

(54) **Kippbares Fahrerhaus eines Frontlenker-Lastkraftwagens**
Tilting driver's cab for cab-over-engine load carrying vehicle
Cabine de conducteur basculable pour véhicule à marchandises à cabine avancée

(30) Priorität: 22.12.1994 DE 4446046
(43) Veröffentlichungstag der Anmeldung: 26.06.1996
(73) Patentinhaber: MAN Nutzfahrzeuge Aktiengesellschaft, 80976 München (DE)
(72) Erfinder: Rieck, Gerhard, Dipl.-Ing., D-81247 München (DE); Kneifel, Eberhard, Dipl.-Ing., D-80639 München (DE); Watzek, Gerhard, D-80935 München (DE); Geyer, Wolfgang, D-80992 München (DE); Koch, Erich, D-85757 Karlsfeld (DE)

(56) Entgegenhaltungen:
- EP-A- 0 472 284
- DE-A- 4 133 814
- FR-A- 710 567
- FR-A- 965 441
- FR-A- 2 136 655
- FR-A- 2 502 230
- US-A- 2 502 320
- US-A- 3 055 699
- PATENT ABSTRACTS OF JAPAN vol. 18 no. 274 (M-1611) ,25.Mai 1994 & JP-A-06 048327 (MITSUBISHI) 22.Februar 1994,

## Beschreibung

Die Erfindung betrifft ein kippbares Fahrerhaus eines Frontlenker-Lastkraftwagen mit Merkmalen entsprechend dem Oberbegriff des Anspruches 1.

Die Fahrerhäuser von Frontlenker-Lastkraftwagen sind in der Praxis in der Regel als doppelwandige Blechpreßteil-Konstruktion dargestellt. Dabei werden die Frontwand, Seitenwände und Rückwand ebenso wie die Türen aus weitgehend glatten, gegebenenfalls leicht versickten und miteinander durch Punktschweißen verbundenen inneren und äußeren Blechpreßteilen hergestellt, die teilweise, insbesondere in Krafteinleitungsbereichen durch blechseitige Doppelungen verstärkt sind. Außerdem wurde die Flächensteifigkeit der Wände und Türen durch Blechspanner oder Blechpreßstützprofile erhöht. Die solchermaßen hergestellten Fahrerhäuser erfüllen die geltenden ECE-Vorschriften und, soweit erforderlich, auch die erhöhten Anforderungen des sogenannten Schweden-Tests. Diese Fahrerhäuser sind trotzdem aber nicht so stabil bzw. widerstandsfähig, um dem Fahrer und Beifahrer einen überlebenssicheren Raum bei allen im Fahrbetrieb auftretenden Unfällen zu bieten. Schwere Unfälle, an denen Frontlenker-Lastkraftwagen beteiligt waren und die infolge extrem deformierter Fahrerhäuser schwerstverletzte oder getötete Fahrer- und Beifahrer zur Folge hatten, machen dies ebenso deutlich, wie Analysen der diesbezüglichen Unfallhergänge. Starke Beschädigungen von Frontlenker-Fahrerhäusern treten zum Beispiel bei Auffahrunfällen auf, bei denen ein Frontlenker-Lkw mit großem Geschwindigkeitsunterschied auf sperrige Hindernisse wie Nutzfahrzeuge mit Ladebrücken, Tankaufbauten oder Ladungsteile aufprallt, wobei die hieraus resultierende Deformation des Fahrerhauses erfolgt, bevor ein Unterfahrschutz oder sonstige Fahrgestell-Teile größeren Widerstand bieten können. Einhergeht mit einem solchen Frontalaufprall in der Regel auch ein Nach-vorn-Rutschen der Ladung, was eine Deformation des Fahrerhauses auch von hinten zur Folge hat. Dieses Nachrutschen der Ladung ist bei einem Frontalaufprall in der Regel auch dann aufgrund der physikalischen Gesetzmäßigkeiten nicht verhinderbar, wenn die Ladung zuvor ordnungsgemäß auf der Ladefläche oder im Laderaum gesichert war. Einzelne Teile der Ladung können dabei auch, quasi wie Geschosse wirkend, die Fahrerhaus-Rückwand durchschlagen und in den Innenraum des Fahrerhauses eindringen, was dann, wenn die frontseitige Deformation des Fahrerhauses noch nicht so kritisch für Fahrer- und Beifahrer war, trotzdem zu schwersten oder gar tödlichen Verletzungen dieser Fahrerhaus-Insassen führt. Solchen Verletzungsgefahren für Fahrer- und Beifahrer kann auch durch aktive Rückhaltevorkehrungen im Fahrerhaus wie Fahrer- und Beifahrer-Airbag und Sicherheitsgurte nicht Rechnung getragen werden.

Es ist daher Ziel / Aufgabe der Erfindung, das Fahrerhaus eines Frontlenker-Lastkraftwagen gezielt so zu verstärken und zu versteifen, daß es bei jeder Art von Unfällen den Insassen eine wesentlich höhere Sicherheit als bisher realisierte Fahrerhäuser bietet, trotzdem aber mit vertretbarem Kostenaufwand herstellbar ist.

Diese Aufgabe ist bei einem Fahrerhaus der gattungsgemäßen Art erfindungsgemäß durch die im Kennzeichen des Anspruches 1 angegebenen Merkmale gelöst.

Entsprechend der Lehre der Erfindung wird das Fahrerhaus durch ein wandintegrales Versteifungsgerippe gezielt verstärkt und versteift, wobei diese Integration von widerstanderhöhenden Profil-Querschnitten in den erfindungsgemäßen Bereichen hauptsächlich durch entsprechende Gestaltung der Innenblechpreßteile der Fahrerhaus-Außenwände und Türen, jedoch in Abstimmung mit einer angepaßten Gestaltung der Außenblechpreßteile sowie durch zusätzlich ein- bzw. angebaute, durch Blechpreßteile realisierte Versteifungsprofilleisten erzielt wird. Diese in den Knotenbereichen fest oder lösbar angeschlossenen Versteifungsprofilleisten erhöhen die Widerstandskraft der ohnehin schon durch die anderen Maßnahmen gegenüber herkömmlichen Fahrerhaus-Strukturenwiderstandsfähigeren Fahrerhäuser bei äußerer Krafteinwirkung, z.B. während eines Unfalles, mit dem Ergebnis einer verbesserten passiven Sicherheit für Fahrer- und Beifahrer. Außerdem bewirkt die Integration der ebenfalls in entsprechender Weise verstärkten Türen in die Gesamtstruktur der Verstärkungs-/Versteifungsmaßnahmen des Fahrerhauses, daß die Türen während eines Crash-Vorganges nicht ausweichen können, sondern sich innerhalb der Seitenwände mit diesen vorn und hinten im Türausschnitt verkeilen und somit im Gesamtverbund mit den anderen Maßnahmen ganz wesentlich zur Versteifung des Fahrerhauses beitragen. Die Rundumversteifung des Fahrerhauses in den wenigstens drei Höhenlagen, nämlich im Bereich des Fahrerhaus-Bodens, im Bereich des Überganges zum Dach sowie im Brüstungsbereich unterhalb der Windschutzscheibe, stellt am Fahrerhaus drei Zonen bereit, in denen gezielt von außen in Horizontalrichtung einwirkenden Kräften entgegengewirkt werden kann. Die mechanische Verknüpfung dieser in den drei Höhenlagen / Horizontalebenen gegebenen Versteifungen / Verstärkungen mit den diesbezüglich in mehreren Vertikalebenen gegebenen Versteifungen / Verstärkungen des Fahrerhauses tragen somit letztendlich dazu bei, daß im Falle eines Unfalles das Fahrerhaus weniger stark als bei bisher bekannten Lösungen verformt wird und auch gegen die Auswirkungen von verrutschender Ladung besser als bisher geschützt ist, so daß in Verbindung mit weiteren üblichen Rückhaltesystemen (Sicherheitsgurt, gegebenenfalls mit Gurtstrammer und Gurtkraftbegrenzer sowie Airbag) für die Insassen des Fahrerhauses das Risiko von schweren oder gar tödlichen Verletzungen erheblich reduziert ist.

Vorteilhafte Ausgestaltungen und Weiterbildungen der erfindungsgemäßen Lösung sind in den Unteransprüchen angegeben. Details derselben ergeben sich auch aus der nachfolgenden Figurenbeschreibung. In dieser ist die erfindungsgemäße Lösung anhand eines in der Zeichnung dargestellten Ausführungsbeispieles näher beschrieben. In der Zeichnung zeigen:
- Fig. 1: weitgehend schematisiert ein Fahrerhaus eines Frontlenker-Lastkraftwagen mit den erfindungsgemäß versteiften/verstärkten Zonen,
- Fig. 2: weitgehend schematisiert in Seitenansicht (Ansicht X) des Fahrerhauses gemäß Fig. 1,
- Fig. 3: eine Ausführungsform der erfindungsgemäßen Lösung gemäß Schnitt A-A aus Fig. 2 im Bereich einer A - bzw. Scharniersäule,
- Fig. 4: eine Ausführungsform der erfindungsgemäßen Lösung gemäß Schnitt B - B aus Fig. 2 im Bereich einer B - bzw. Schloßsäule,
- Fig. 5: eine Ausführungsform der erfindungsgemäßen Lösung gemäß Schnitt C - C aus Fig. 1 im Türbereich einer Fahrerhaus-Seitenwand,
- Fig. 6: eine Ausführungsform der erfindungsgemäßen Lösung gemäß Schnitt D - D aus Fig. 1 im Bereich einer Fahrerhaus-Seitenwand ohne Seitenfenster hinter einer Tür,
- Fig. 7: eine Ausführungsform der erfindungsgemäßen Lösung ausschnittsweise aus Schnitt D - D von Fig. 1 im Bereich einer Fahrerhaus-Seitenwand mit Seitenfenster (siehe Fig. 2) hinter einer Tür,
- Fig. 8: eine Ausführungsform der erfindungsgemäßen Lösung gemäß Schnitt E - E aus Fig. 1 im Bereich einer Fahrerhaus-Rückwand, die Rückwandfenster aufweist,
- Fig. 9: eine Ausführungsform der erfindungsgemäßen Lösung ausschnittsweise aus Schnitt E - E von Fig. 1 im Bereich der Fahrerhaus-Rückwand, die keine Rückwandfenster aufweist,
- Fig. 10: eine Ausführungsform der erfindungsgemäßen Lösung gemäß Schnitt F - F aus Fig. 1 im Bereich der Fahrerhaus-Frontwand,
- Fig. 11: eine Ausführungsform der erfindungsgemäßen Lösung gemäß Schnitt G - G aus Fig. 1 im Bereich der Fahrerhaus-Rückwand, die Rückwandfenster aufweist, und
- Fig. 12: eine Ausführungsform der erfindungsgemäßen Lösung gemäß Schnitt G - G aus Fig. 1 im Bereich der Fahrerhaus-Rückwand, die keine Rückwandfenster aufweist.

Die Erfindung bezieht sich auf ein kippbares Fahrerhaus eines Frontlenker-Lastkraftwagen, das außenseitig durch einen Boden 1 mit Motortunnel 2, eine Frontwand 3 mit Windschutzscheibe 4 und Frontklappe 5, zwei Seitenwände 6, 7 mit Türen 8, 9 und gegebenenfalls Seitenfenstern 10, 11,einer Rückwand 12 ohne oder mit Rückwandfenstern 13, 14 sowie einem Dach 15 begrenzt ist. Das Fahrerhaus weist am Boden 1 beiderseits des Motortunnels 2 Längsträger (in der Zeichnung nicht dargestellt) auf und ist über diese sowie eine vordere Lageranordnung schwenkbar an einem Fahrgestell-Rahmen angeschlossen sowie gegenüber diesem durch Federungselemente gestützt. Dieser Anschluß des Fahrerhauses und dessen Abstützung am Fahrgestell-Rahmen ist in der Zeichnung der Übersichtlichkeit wegen nicht dargestellt. Die Frontwand 3, Rückwand 12, Seitenwände 6, 7 und Türen 8, 9 sind jeweils aus wenigstens einem äußeren Blechpreßteil und wenigstens einem mit diesem fest, insbesondere durch Punktschweißen verbundenen inneren Blechpreßteil gebildet.

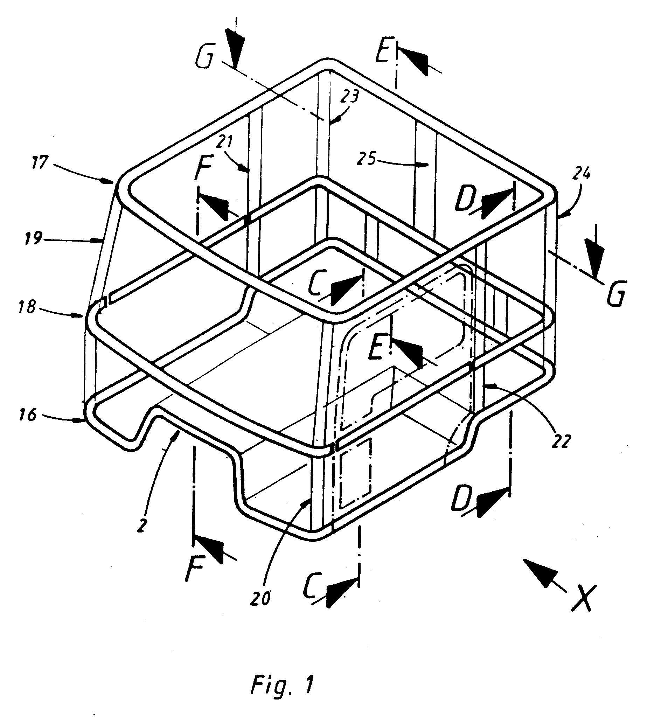

Der Lehre der Erfindung entsprechend ist das Fahrerhaus unter Einschluß der Türen 8, 9 als Sicherheitszelle für Fahrer und Beifahrer ausgebildet. Hierfür sind dessen Frontwand 3, Rückwand 12 und Seitenwände 6, 7 gezielt verstärkt / versteift, und zwar durch eine besondere preßtechnische Profilierung von deren Innen-und Außenblechpreßteilen sowie durch zumindest partielle weitere Verstärkung dieser Versteifungsprofilbereiche mit zusätzlichen Blechpreßprofilen. Diese Versteifungen/Verstärkungen sind - wie aus Fig. 1 ersichtlich -
a) in wenigstens drei verschiedenen Höhenlagen 16, 17, 18 umlaufend, nämlich
   - einer unteren (16) im Bereich des Fahrerhaus-Bodens 1,
   - einer oberen (17) am Übergang zum Fahrerhaus-Dach 15,
   - einer mittleren (18) im Bereich der Brüstungslinie unterhalb der Windschutzscheibe 4,
   sowie
b) in mehreren Vertikalebenen und dort
   - im Bereich der beiden A - bzw. Scharniersäulen 19, 20,
   - im Bereich der beiden B - bzw. Schloßsäulen 21, 22,
   - im Bereich der beiden C-Säulen 23, 24 und
   - wenigstens einer Säule 25 in der Rückwand 12,
gegeben.

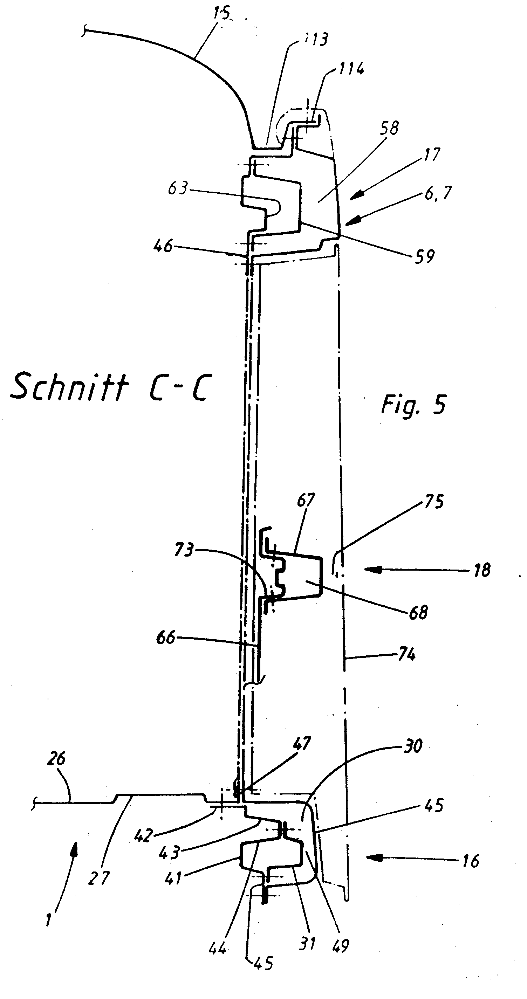

Diese Versteifungs-/Verstärkungs-Profilbereiche sind untereinander an den Anschlußstellen teils fest, teils lösbar miteinander verbunden und bilden so ein aus Fig. 1 ersichtliches wandintegrales Versteifungsgerippe, in das auch die Türen 8, 9 durch entsprechende Verstärkung im Bereich der mittleren Höhenlage (siehe Fig. 5) sowie der Boden 1 durch entsprechende Verstärkung (siehe Fig. 5, 6, 8, 10) und das Dach 15 (siehe Fig. 5, 6, 8, 10) durch entsprechende Randgestaltung einbezogen sind.

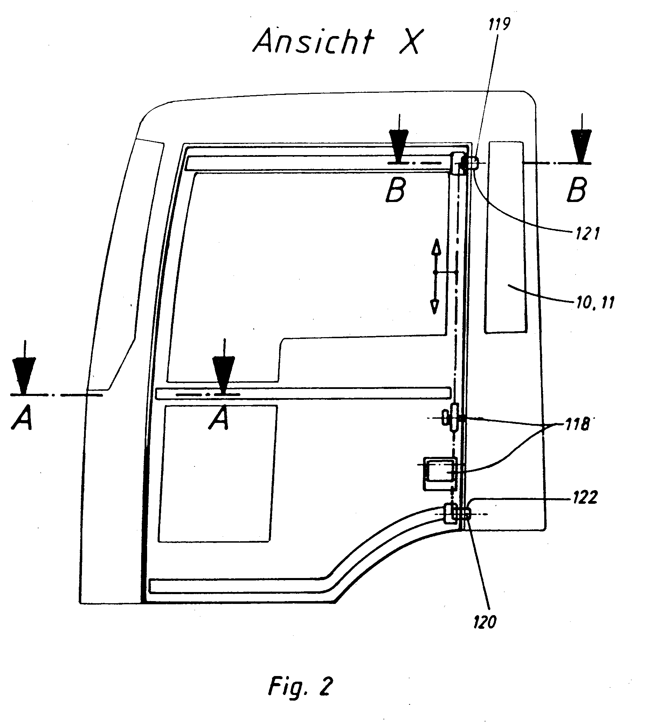

Nachfolgend ist unter Zuhilfenahme der Fig. 2 bis 12 auf Details einer Ausführungsform der erfindungsgemäßen Lösung näher eingegangen.

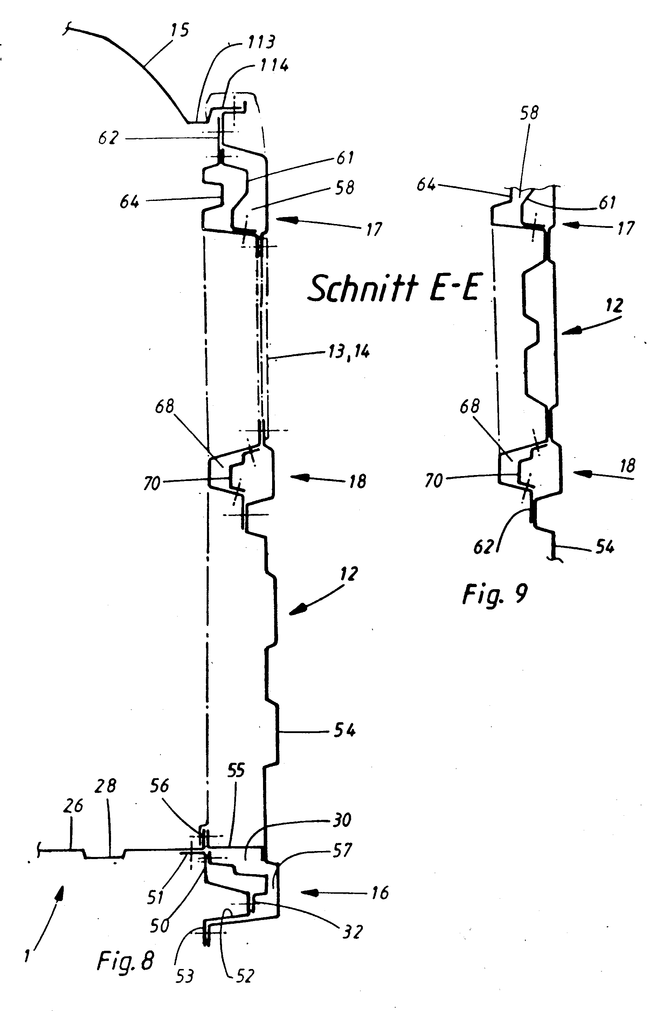

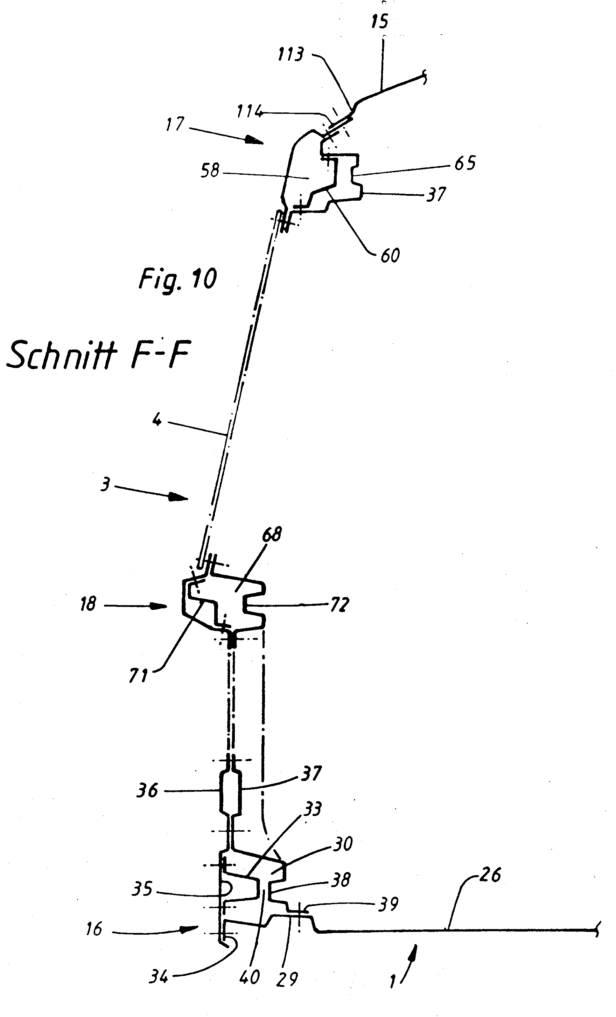

Der Fahrerhaus-Boden 1 weist als Hauptteil ein Bodenblech 26 auf, in dem der Bereich des Motortunnels 2 ausgeformt ist und das das Fahrerhaus nach unten begrenzt. Dieses Bodenblech 26 ist - einbezogen in die Sicherheitsstrategie des Fahrerhauses - in sich versteift und zwar durch beiderseits des Motortunnelbereiches teils nach oben, teils nach unten vorspringend eingepreßte rinnenartige Längs-und Quersicken 27 (siehe Fig. 5), 28 (siehe Fig. 8), 29 (siehe Fig 10).

Die Versteifungen/Verstärkungen des Fahrerhauses sind im Bereich der unteren Höhenlage 16 durch entsprechende Profilierung der Außen- und Innenbleche der Frontwand 3, Seitenwände 6, 7 und Rückwand 12 in Verbindung mit speziell profilierten, unten und/oder außen am Fahrerhaus-Boden 1 befestigten Bodenprofilträgern realisiert, so daß sich unten in jeder Fahrerhaus-Außenwand 3, 6, 7, 12 ein sich jeweils über die ganze Länge erstreckendes Hohlprofil 30 ergibt (siehe Fig. 5, 6, 8, 10), das zumindest an kritischen Stellen durch ein- bzw. angebaute Blechpreßprofilleisten 31, 32, 33 zusätzlich verstärkt ist.

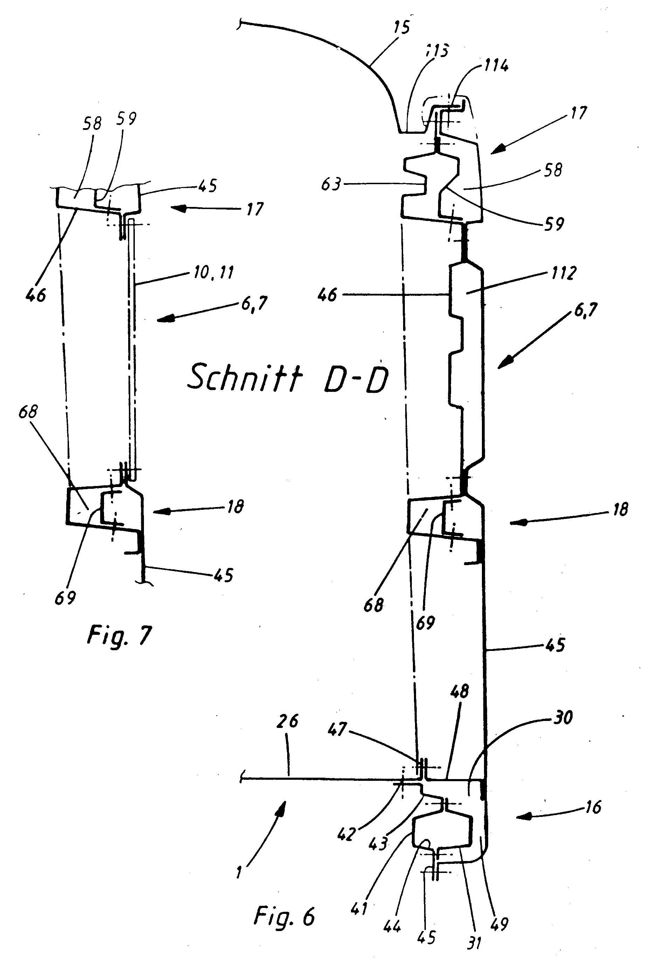

Dieses untere Hohlprofil 30 ist im Bereich des vorderen Überganges vom Fahrerhaus-Boden 1 zur Fahrerhaus-Frontwand 3 beispielsweise wie aus Fig. 10 ersichtlich realisiert. Dabei weist der Fahrerhaus-Boden 1 an seinem Bodenblech 26 vorne einen Vertikalflansch 34 auf, an dem das diesen mit einer unteren, nach vorn auswärts ausgepreßten, relativ breiten Querversteifungssicke 35 überlappende Außenblech 36 der Fahrerhaus-Frontwand abgestützt angeschlossen ist. Ferner ist das Innenblech 37 der Fahrerhaus-Frontwand 3 an seinem unteren Bereich mit einer weit nach innen vorspringenden Profilrinne versehen, die bodenseitig eine nach vorne vorspringend eingepreßte, über die ganze Breite gehende Versteifungssicke 38 aufweist. Unterhalb der Profilrinne ist das Innenblech 37 mit einem Querflansch 39 auf der Oberseite der im Bodenblech 26 eingeformten Quersicke 29 abgestützt befestigt. In dieses so gebildete geschlossene Hohlprofil 30 ist zur weiteren Versteifung des Fahrerhauses in diesem Bereich die Versteifungsprofilleiste 33 eingebaut. Im dargestellten Beispiel besitzt diese einen U-T-Querschnitt, ist mit ihrem T-Kopfteil innenseitig im Bereich der Querversteifungssicke 35 am Außenblech 36 der Frontwand 3 angeschlossen und erstreckt sich mit ihrem U-Fußteil zur Versteifungssicke 38 des Frontwand-Innenbleches 37 hin, soweit, daß vorzugsweise ein größerer Spalt 40 zur Bildung einer im Crash-Fall initialenergieverzehrenden Verformungszone verbleibt. Im Bereich der beiden Längsseiten des Fahrerhauses ist das untere Hohlprofil 30 beispielsweise wie aus den Fig. 5 und 6 ersichtlich ausgestaltet. Dabei ist am Bodenblech 26 des Fahrerhaus-Bodens 3 unten an dessen beiden Längsaußenbereichen jeweils ein durch ein Blechpreßteil gebildeter Bodenprofilträger 41 mit einem oberen Flansch 42 angeschlossen. Dieser Bodenprofilträger 41 weist zwei gegensinnig eingepreßte und sich über seine ganze Länge erstreckende Versteifungssicken 43, 44 und im untersten Bereich einen Vertikalflansch 45 auf, an dem das untenseitig einwärts gepreßte Außenblech 45 der Fahrerhaus-Seitenwand 6 bzw. 7 mit einem unteren Flansch abgestützt angeschlossen ist. Die obere Versteifungssicke 43 ist dabei in den Bodenprofilträger 41 seitlich auswärts und die untere Versteifungssicke nach einwärts gerichtet eingepreßt. Das Außenblech 45 der Seitenwand 6 bzw. 7 ist im Bereich einer Tür 8, 9 zur Bildung eines Türschwellers und Türausschnitts (siehe Fig. 5) nach innen gezogen und unten zusammen mit dem Innenblech 46 der Seitenwand 6 bzw. 7 an einem Vertikalflansch 47 des Bodenbleches 26 angeschlossen. Im Bereich hinter dem Türausschnitt ist die Seitenwand 6 bzw. 7 (siehe Fig. 6) mit ihrem Außenblech 45 an einer im Querschnitt Z-förmigen, durch ein Blechpreßteil gebildeten Distanzleiste 48 abgestützt befestigt, die ein Teil des Fahrerhaus-Bodens 1 sowie in diesem Bereich die obere Begrenzung des Hohlprofiles 30 bildet. In dieses so gegebene, von vorn nach hinten durchgehende Hohlprofil 30 ist zur weiteren Versteifung die durch ein Blechpreßteil realisierte Versteifungsprofilleiste 31 eingebaut. Diese weist vorzugsweise einen U-T-Querschnitt auf, ist mit ihrem T-Kopfbereich außenseitig am Bodenprofilträger 41 angeschlossen und erstreckt sich mit ihrem U-Fußbereich seitlich nach außen zum Außenblech 45 der Fahrerhaus-Seitenwand 6 bzw. 7 hin, vorzugsweise jedoch nur soweit, daß dazwischen ein größerer Spalt 49 zur Bildung einer im Crash-Fall initialenergieverzehrenden Verformungszone verbleibt.

Das Hohlprofil 30 kann hinten am Fahrerhaus wie aus Fig. 8 ersichtlich realisiert sein. Dabei ist am Bodenblech 26 des Fahrerhaus-Bodens 1 an dessen hinterem Endbereich unten ein durch ein Blechpreßteil gebildeter Bodenprofilträger 50 mit einem oberen Querflansch 51 angeschlossen. Dieser Bodenprofilträger 50 erstreckt sich unter Überquerung des Motortunnels 2, dort der Kontur des Bodenbleches 26 folgend, über die ganze Fahrerhausbreite und weist eine nach hinten außend vorspringende, sich über seine ganze Länge erstreckende Versteifungssicke 52 sowie im untersten Bereich einen Vertikalflansch 53 auf, an dem das herunter und einwärts gezogene untere Ende des Außenbleches 54 der Rückwand 12 mit einem unteren Vertikalflansch abgestützt angeschlossen ist. Weiter oben in Höhe des Bodenbleches 26 ist das Rückwand-Außenblech 54 desweiteren an einer im Querschnitt Z-förmigen, durch ein Blechpreßteil gebildeten Distanzleiste 55 abgestützt befestigt, die innenseitig wiederum an einem Vertikalflansch 56 des Bodenbleches 26 abgestützt befestigt ist und ein Teil des Fahrerhaus-Bodens 1 sowie die obere Begrenzung des Hohlprofiles 30 bildet. In dieses hinten im unteren Fahrerhaus-Bereich quer durchgehenden Hohlprofil 30 kann -wie in Fig. 8 dargestellt - die durch ein Blechpreßteil realisierte Versteifungsprofilleiste 32 eingebaut sein. Diese besitzt vorzugsweise einen U-T-Querschnitt, ist mit ihrem T-Kopfbereich außenseitig am Bodenprofilträger 32 abgestützt angeschlossen und erstreckt sich mit ihrem U-Fußbereich nach hinten zum Rückwand-Außenblech 54 hin, vorzugsweise jedoch nur so weit, daß dazwischen ein größerer Spalt 57 zur Bildung einer im Crash-Fall initialenergieverzehrenden Verformungszone verbleibt.

Im Bereich der oberen Höhenlage / Horizontalebene 17 sind die Versteifungen / Verstärkungen des Fahrerhauses durch entsprechende Profilierung der Außen-und Innenbleche der Frontwand 3, Seitenwände 6, 7 und Rückwand 12 in Verbindung mit einer speziellen Randgestaltung des aufgesetzten Fahrerhaus-Daches 15 realisiert, so, daß sich in diesem oberen Fahrerhaus-Bereich in jeder Außenwand 3, 6, 7, 12 ein sich jeweils über die ganze Länge erstreckendes Hohlprofil 58 ergibt, das zumindest an kritischen Stellen durch ein- bzw. angebaute, durch Blechpreßteile realisierte Versteifungsprofilleisten 59 (siehe Fig. 5 und 6), 60 (siehe Fig. 10), 61 (siehe Fig. 8 und 9) zusätzlich verstärkt ist. Auf Einzelheiten dieses Versteifungs-/Verstärkungsbereiches ist nachfolgend anhand der Fig. 5 bis 10 eingegangen. Die Innenbleche 37, 46 und 62 der Frontwand 3, Seitenwände 6, 7 und Rückwand 12 sind jeweils zur Bildung des oberen Hohlprofiles 58 mit einer vergleichsweise weit nach innen einwärts eingezogenen rinnenartigen Vertiefung versehen und weisen in diesem Bereich jeweils eine nach außen zum Außenblech 36 bzw. 45 bzw. 54 hin gerichtet vorspringende Versteifungssicke 63 (siehe Fig. 5 und 6), 64 (siehe Fig. 8 und 9), 65 (siehe Fig. 10) auf. Dabei verbleibt zwischen jeder der Versteifungssicken 63, 64, 65 und dem benachbarten Abschnitt des jeweiligen Außenbleches 45, 54, 36 ein größerer Abstand zur Bildung einer im Crash-Fall initialenergieverzehrenden Verformungszone. Innerhalb dieser erstrecken sich im Bereich des oberen Hohlprofils 58 zumindest in den kritischen Fahrerhauszonen die zusätzlichen Versteifungsprofilleisten 59, 60, 61. Diese übergreifen mit gewissem Abstand die innenblechseitigen Versteifungssicken 63 bzw. 64 bzw. 65 und sind mit randseitigen Flanschbereichen vorzugsweise an den Innenblechen 37 bzw. 46 bzw. 62 abgestützt befestigt. Dabei besteht vorzugsweise kein Kontakt zwischen den Versteifungsprofilleisten 59 bzw. 60 bzw. 61 und den außen vorgelagerten Außenblechbereichen, um den Charakter einer Verformungszone zu wahren. Die Versteifungsprofilleisten 59, 60, 61 haben, wie aus den Fig. 5 bis 10 ersichtlich, unterschiedliche Querschnitte und sind in sich vorzugsweise der Länge nach mit Versteifungssicken versehen.

Im Bereich der mittleren Höhenlage / Horizontalebene 18 sind die Versteifungen / Verstärkungen des Fahrerhauses ebenfalls wie im Bereich der oberen Höhenlage durch entsprechende Profilierung der Außen- und Innenbleche der Frontwand 3, Seitenwände 6, 7 und Rückwand 12 sowie durch eine entsprechende Profilierung des Türinnenbleches 66 in Verbindung mit einer dort aufgesetzten, zur Versteifung dienenden Blechpreßprofilleiste 67 realisiert, so daß sich auch in dieser mittleren Höhenlage des Fahrerhauses in jeder Außenwand 3, 6, 7, 12 ein sich über die ganze Länge erstreckendes Hohlprofil 68 ergibt, das auch in den Fahrerhauswänden zumindest teilweise durch ein- bzw. angebaute, durch Blechpreßteile realisierte Versteifungsprofilleisten 69 (siehe Fig. 6 und 7), 70 (siehe Fig. 8 und 9), 71 (siehe Fig. 10) zusätzlich verstärkt ist. Einzelheiten des mittig umlaufenden Hohlprofiles 68 sind aus den Fig. 5 bis 10 ersichtlich und nachfolgend näher erläutert. Aus diesen Darstellungen ist ersichtlich, daß die Innenbleche 37, 46, 62 der Frontwand 3, Seitenwände 6, 7 und Rückwand 12 zur Bildung des Hohlprofiles 68 mit einer relativ weit einwärts gepreßten rinnenartigen Vertiefung versehen sind und bodenseitig zumindest teilweise (siehe Fig. 10 im Bereich der Frontwand 3) eine zum Außenblech soweit hin gerichtete Versteifungssicke 72 aufweisen, daß dazwischen ein relativ großer Abstand zur Bildung einer im Crash-Fall initialenergieverzehrenden Verformungszone freibleibt. Innerhalb dieser Verformungszone im Bereich des mittleren Hohlprofiles 68 erstrecken sich die Versteifungsprofilleisten 69 bzw. 70 bzw. 71, die von Fall zu Fall hinsichtlich ihrer Querschnittsgestaltung den Stabilitätsanforderungen des jeweiligen Bereiches entsprechend angepaßt und mit an ihnen gegebenen Flanschen entweder am Innenblech oder Außenblech der jeweiligen Wand 3, 6, 7, 12 abgestützt befestigt sind. In jedem Fall haben die Versteifungsprofilleisten 69, 70, 71 zumindest abschnittsweise auch zu den vorgeordneten Bereichen der Außenbleche der Wände 3, 6, 7, 12 einen gewissen Abstand zur Bildung einer im Crash-Fall initialenergieverzehrenden Verformungszone. Im Bereich einer Tür 8 bzw. 9 ist das Hohlprofil 68, wie aus Fig. 5 ersichtlich, durch eine in das Türinnenblech 66 eingepreßte Versteifungsrinne 73 mit versicktem Boden realisiert, die von der an ihr außenseitig oben und unten angeschlossenen, vorzugsweise einen U-T-Querschnitt aufweisenden Profilleiste 67 übergriffen ist. Zwischen der mit ihrem U-Fußbereich zum Außenblech 74 der Tür 8 bzw. 9 hingerichteten Profilleiste 67 verbleibt ein größerer Spalt 75 zur Bildung einer im Crash-Fall initialenergieverzehrenden Verformungszone.

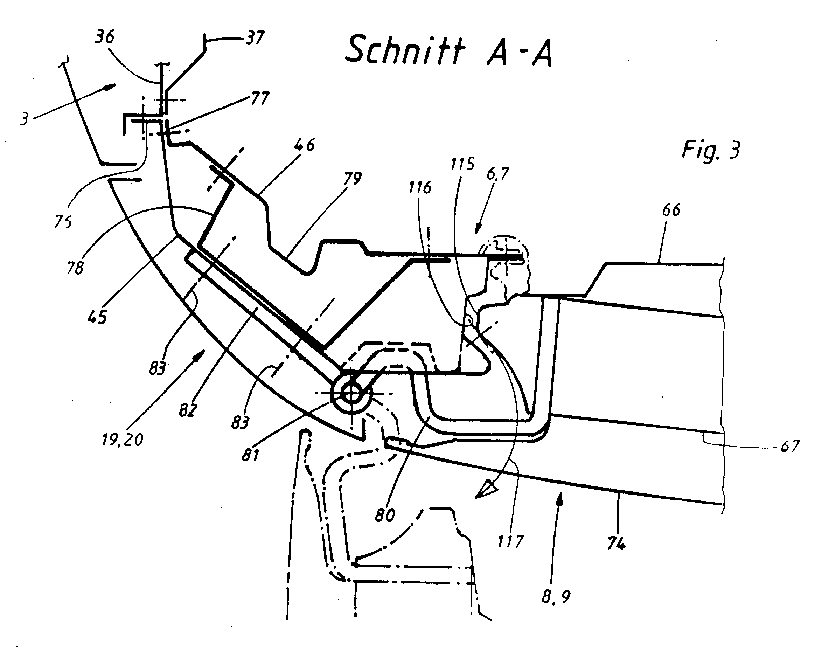

Die in den drei Höhenlagen 16, 17, 18 wie vorbeschrieben gegebenen Versteifungs-/Verstärkungs-Elemente sind frontseitig des Fahrerhauses mit den A - bzw. Scharniersäulen 19, 20 verbunden. Letztere sind jeweils - wie aus Fig. 3 ersichtlich - durch hohlprofilige Ausgestaltung und entsprechende überlappende Verbindung der Innen- und Außenbleche 45, 46 der Fahrerhaus-Seitenwände 6, 7 im vorderen eckseitigen Übergangsbereich zur Fahrerhaus-Frontwand 3 gebildet. Dabei ist das Außenblech 45 der Seitenwand 6 bzw. 7 vorne um die Ecke einwärts gezogen und dort mittels eines an seinem inneren Ende gegebenen Flansches 76 an einem entsprechenden Flansch des Außenbleches 36 der Frontwand 3 angeschlossen. Das Innenblech 46 der Seitenwand 6 bzw. 7 ist im Bereich der A - bzw. Scharniersäule 19, 20 ebenfalls relativ weit beabstandet vom Außenblech 45 über Eck einwärts gezogen und dort endseitig über einen Flansch 77 innenseitig am Außenblech 45 abgestützt befestigt. Innerhalb dieses so hohlprofiligen Eckbereiches ist zu dessen Verstärkung eine durch ein Blechpreßteil realisierte Versteifungsprofilleiste 78 eingebaut. Diese hat vorzugsweise einen U-T-Querschnitt, ist mit ihrem T-Kopfteil am Innenblech 46 der Seitenwand 6 bzw. 7 innen abgestützt befestigt sowie mit ihrem U-Fußbereich schräg nach außen vorn zum Seitenwand-Außenblech 45 hingerichtet und innenseitig mit letzterem verbunden. Zwecks weiterer Versteifung der A- bzw. Scharniersäule kann das Innenblech 46 der Seitenwand 6 bzw. 7, wie aus Fig. 3 ersichtlich, eine sich in den Profilinnenraum der Versteifungsprofilleiste 78 hineinerstreckende Versteifungssicke 79 aufweisen, zwischen deren Boden und jenem der Versteifungsprofilleiste 78 sowie dem Außenblech 45 ein größerer Abstand zur Bildung einer im Crash-Fall initialenergieverzehrenden Verformungszone verbleibt.

Aus Fig. 3 ist auch ersichtlich, wie die Türen 8 bzw. 9 über Scharnierbügel 80 (wenigstens zwei je Tür) und Scharniere 81 an Scharnierhaltern 82 angelenkt sind, welch letztere wiederum im Bereich der A - bzw. Scharniersäule 19 bzw. 20 an einem entsprechend ebenen Flächenabschnitt des Außenbleches 45 der Seitenwand 6 bzw. 7 außen anliegend und mit dieser sowie der inneren Versteifungsprofilleiste 78 durch Schrauben 83 verbunden sind.

Hinter den Türen 8, 9 erstrecken sich die in den Höhenlagen 16, 17, 18 wie vorstehend beschriebenen Verstärkungs-/Versteifungselemente in den Seitenwänden 6, 7 jeweils zwischen den B - bzw. Schloßsäulen 21, 22 und C-Säulen 23, 24 und sind vorn und hinten mit diesen verbunden.

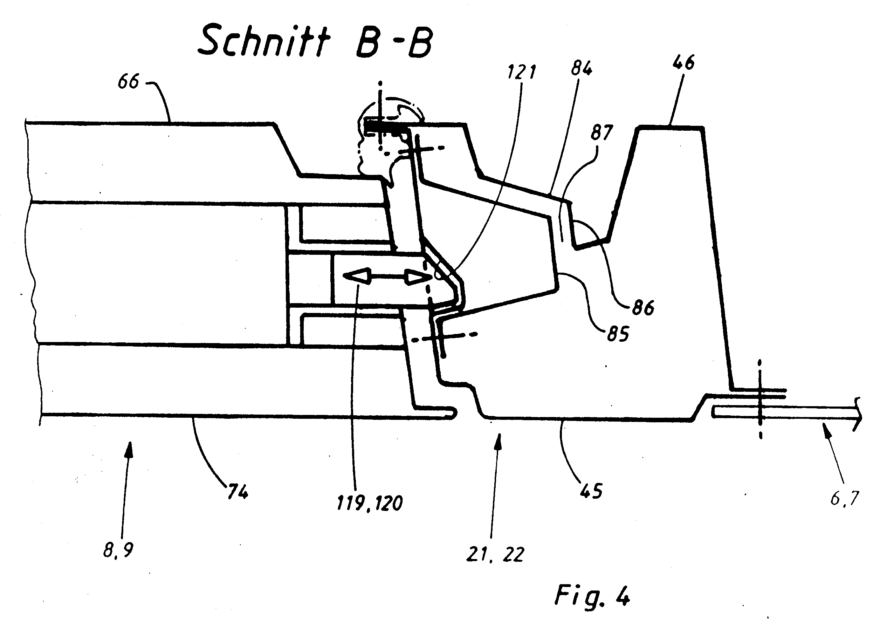

Die B - bzw. Schloßsäulen 21, 22 sind - wie aus Fig. 4 ersichtlich - im Anschluß an den Türausschnitt durch eine hohlprofilige Ausgestaltung der Innen- und Außenbleche 45, 46 der Seitenwände 6, 7 gebildet. Hierzu ist das Innenblech 46 in diesem Bereich relativ weit zum Außenblech 45 beabstandet einwärts gezogen und mit einer eingepreßten Versteifungssicke 84 versehen, die in den ansonsten etwa rechteckigen oder trapezförmigen Querschnitt dieses so gebildeten Hohlprofiles hineinragt. Zur Versteifung der B - bzw. Schloßsäulen 21, 22 ist in den Innenraum des jeweiligen Hohlprofiles eine durch ein Blechpreßteil mit U-T-Querschnitt realisierte Versteifungsprofilleiste 85 eingebaut. Diese ist mit ihrem T-Kopfteil vorzugsweise innenseitig an dem den Türausschnitt begrenzenden Außenblech-Abschnitt abgestützt angeschlossen, weist mit ihrem U-Fußteil in Richtung einer in der Versteifungssicke 84 ausgebildeten Fangrinne 86 und beläßt jedoch zu dieser hin einen gewissen Freiraum 87 zur Bildung einer im Crash-Fall initialenergieverzehrenden Verformungszone.

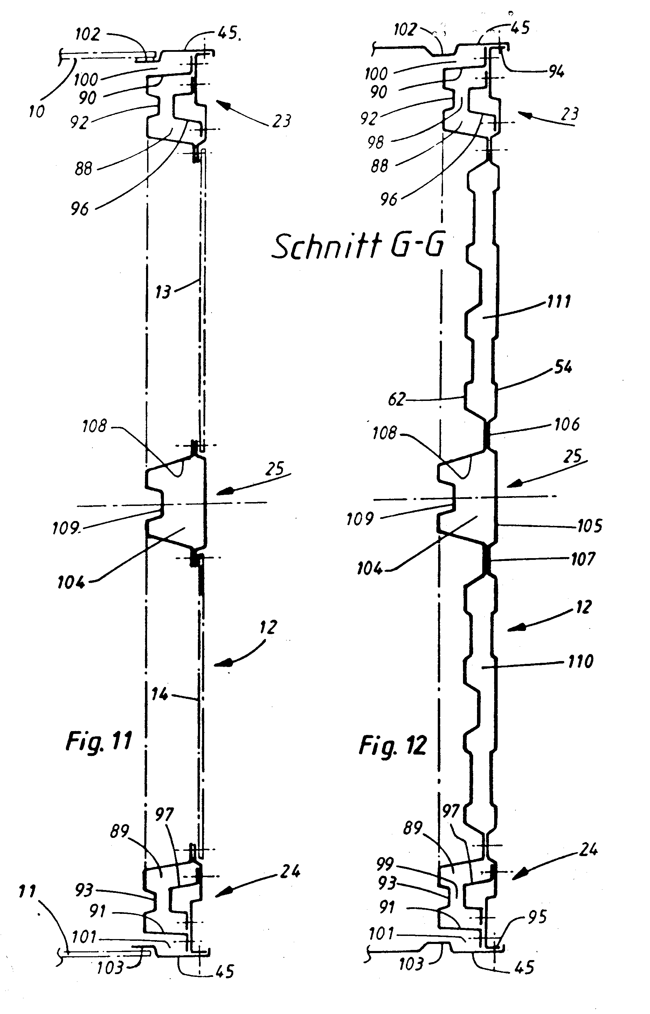

Die im Bereich der hinteren äußeren Ecken des Fahrerhauses gegebenen C-Säulen 23, 24 sind durch versteifte / verstärkte Hohlprofile 88, 89 - wie aus Fig. 11 und 12 ersichtlich - realisiert. Dabei sind die Hohlprofile 88, 89 vorzugsweise durch entsprechende Ausgestaltung der Innen- und Außenbleche 62, 54 der Fahrerhaus-Rückwand 12 gebildet. Hierzu weist das Rückwand-Innenblech 62 an beiden vertikalen Außenbereichen jeweils eine weit nach vorn eingepreßte vertikal von oben nach unten durchgängige Versteifungsrinne 90 bzw. 91 auf, deren Boden wiederum durch eine nach hinten vorspringende Versteifungssicke 92, 93 verstärkt ist. Beiderseits der Versteifungsrinne 90, 91 sind Flansche gegeben, an denen das Rückwand-Außenblech 54 abgestützt angeschlossen ist. An dessen beiden äußeren Rändern sind Flansche 94, 95 gegeben, an denen jeweils das diesen mit seinem hinteren Ende übergreifende Seitenwand-Außenblech 45 abgestützt angeschlossen ist. In die C-Säulen-bildenden Hohlprofile 88, 99 ist jeweils eine durch ein Blechpreßteil gebildete Versteifungsprofilleiste 96, 97 mit U-T-Querschnitt eingebaut, die mit ihrem T-Kopfteil vorzugsweise am Rückwand-Außenblech 54 abgestützt befestigt ist, mit ihrem U-Fußteil zur jeweiligen Versteifungssicke 92 bzw. 93 des Rückwand-Innenbleches 62 hin gerichtet ist und diesen gegenüber vorzugsweise einen größeren Spalt 98, 99 zur Bildung einer im Crash-Fall initialenergieverzehrenden Verformungszone freiläßt. Im Bereich seitlich vor dem jeweils C-Säulen-bildenden Hohlprofil 88, 89 weist das Seitenwand-Außenblech 45, wie ebenfalls aus Fig. 11 und 12 ersichtlich, eine zu letzterem hin gerichtete, aber einen Spalt 100, 101 zur Bildung einer im Crash-Fall initialenergieverzehrenden Verformungszone freilassende, einwärts gerichtete Vertikalversteifungssicke 103 auf. Aus den Fig. 11 und 12 ist desweiteren ersichtlich, daß zur Vertikal-Versteifung der Rückwand 12 wenigstens eine etwa mittig von unten nach oben durchgehende Säule 25 vorgesehen ist, die ebenfalls durch entsprechende hohlprofilige Ausgestaltung der Innen- und Außenbleche 62, 54 der Rückwand 12 realisiert ist. Hierfür ist das Rückwand-Außenblech 54 zur Bildung des Hohlprofiles 104 beiderseits eines mittleren Vertikal-Abschnittes 105 rinnenbildend mit Einschnürungen 106, 107 versehen und in das Rückwand-Innenblech 62 ist eine weit nach vorn gerichtete Versteifungsrinne 108 eingepreßt. Letztere weist zu ihrer eigenen Versteifung an ihrem Boden eine zum Außenblech-Abschnitt 105 hin gerichtet eingepreßte Versteifungssicke 109 auf, die jedoch einen relativ großen Abstand zur Bildung einer im Crash-Fall initialenergieverzehrenden Verformungszone freiläßt. Obschon in der Zeichnung nicht gezeigt, kann auch in dieses Hohlprofil 104 ähnlich wie in den anderen Vertikalsäulen eine durch ein Blechpreßteil gebildete Versteifungsprofilleiste eingebaut sein.

Die Fahrerhaus-Rückwand 12 ist dann, wenn in ihr keine Fenster vorgesehen sind, in Bereichen zwischen Mittelsäule 25 und C-Säulen 23, 24 ebenso wie die Seitenwände 6, 7 bei den Versionen ohne Fenster 10, 11 im Bereich zwischen den B- und C-Säulen durch Verformungszonen bildende Beabstandung und vertikale, diagonale oder kreuzweise Versteifungsversickung der Innen- und Außenbleche 62, 54 (siehe Fig. 12), 46, 45 (siehe Fig. 6) zusätzlich versteift. In diesen Verformungszonen bildenden Außenwand-Bereichen 110, 111, 112 sind die Innen- und Außenbleche jeweils relativ weit voneinander beabstandet, wobei die dort innen- und außenblechseitig eingepreßten Versteifungssicken zum Abfangen des vorgelagerten Außenblech-Bereiches im Crash-Falle dienen.

Das Fahrerhaus-Dach 15 ist in die Versteifung des Fahrerhauses im Bereich der oberen Höhenlage / Horizontalebene 17 beispielsweise in der Weise mit einbezogen, daß es mit einer vorzugsweise insgesamt umlaufenden Wasserfangrinne 113 (siehe Fig. 5, 6, 8, 10) oder einem entsprechend profilierten Wulst versehen ist. Dabei ergänzt dieser Dach-Versteifungsrand 113 bei aufgesetztem Dach 15 die in der oberen Höhenlage / Horizontalebene 17 des Fahrerhauses dort in der Frontwand 3, den Seitenwänden 6, 7 und der Rückwand 12 gegebenen Versteifungs-/Verstärkungsmaßnahmen im funktionalen Zusammenwirken mit diesen so, daß bei einer von oben einwirkenden Kraft, z. B. bei einem Überschlag des Fahrzeuges, das Dach 15 randseitig über die Wasserfangrinne 113 von den oberen Versteifungsbereichen abgestützt abgefangen wird. Dies bedeutet, daß die Wasserfangrinne 113 bei aufgesetztem Dach zumindest teilweise über den Hohlprofilen 58 angeordnet ist. Randseitig weist das Fahrerhaus-Dach 15 einen umlaufenden Flansch 114 auf, mit dem es obenseitig an einem umlaufenden Randbereich der Außenbleche der Außenwände des Fahrerhauses abgestützt befestigt ist.

Den Türen 8, 9 sind über ihre internen Versteifungs-/Verstärkungsmaßnahmen hinaus zwecks Einbeziehung in die Fahrerhaus-Sicherheitszelle Verriegelungssysteme zugeordnet, die hinsichtlich ihrer Funktion so ausgestaltet sind, daß bei Verformung des Fahrerhauses ein Halten und Einklemmen der Türen 8, 9 innerhalb ihrer Türausschnitte in den Seitenwänden 6, 7 sichergestellt ist. Dabei können diese Verriegelungssysteme generell durch preßtechnisch hergestellte Vorsprünge und diesen räumlich zugeordnete, ebenfalls preßtechnisch hergestellte Fangvertiefungen gebildet sein. Im dargestellten Beispiel sind - wie aus Fig. 3 ersichtlich - solche Vorsprünge 115 im zargenseitigen Bereich des Tür-Innenbleches 66 gegeben und die zugehörigen Fangvertiefungen 116 im zargenseitigen Türausschnitt-Bereich der Seitenwand-Außenbleche 45 realisiert. Dabei sind die Vorsprünge 115 so ausgestaltet, daß sie bei geschlossener Tür 8 bzw. 9 teilweise in die zugehörigen Fangvertiefungen 116 hineinragen, soweit, daß das Öffnen und Schließen der Tür 8 bzw. 9 ungehindert möglich ist. Letzteres ist durch den kreisbogenförmigen Pfeil 117 ersichtlich, der sein Zentrum im Scharnier 81 hat. Bei geschlossener Tür 8 bzw. 9 verkeilen sich im Falle einer Verformung der A - bzw. Scharniersäulen 19, 20 diese Vorsprünge 115 mit den Fangvertiefungen 116, so daß die Türen 8 bzw. 9 nicht aus der Kontur des Fahrerhauses ausweichen können. In gleicher oder ähnlicher Weise können den Türen 8 bzw. 9 auch auf ihrer hinteren, der B - bzw. Schloßsäule 21, 22 zugewandten Seite solche Vorsprünge und Fangvertiefungen zugeordnet sein. Im dargestellten Beispiel sind den Türen 8, 9 jedoch als Bestandteil des zugehörigen Verriegelungssystems im Bereich der B - bzw. Schloßsäulen 21, 22 aktive Verriegelungsorgane zugeordnet. Hierzu sind - wie aus Fig. 2 und 4 ersichtlich - in den Türen 8, 9 mechanisch oder elektromechanisch mit dem jeweiligen Türschloß 118 gekoppelte Verriegelungsbolzen 119, 120 im oberen und unteren Türbereich vorgesehen, denen im Bereich des Türausschnittes in die B - bzw. Schloßsäule 21, 22 der Seitenwand 6, 7 integrierte Riegelfangorgane 121, 122, wie Buchsen oder Vertiefungen, zugeordnet sind. Dabei werden die Verriegelungsbolzen 119, 120 so gesteuert, daß sie nach Schließen der Tür 8 bzw. 9 in die zugehörigen Riegelfangorgane 121, 122 einrasten und beim Öffnen einer Tür 8 bzw. 9 durch Betätigung der entsprechenden Handhabe über den Schloßmechanismus aus ihrer Verschlußlage zurückgezogen werden. Im Schließzustand verhindern somit die Verriegelungsbolzen 119, 120, daß die Türen 8, 9 bei einer Verformung des Fahrerhauses in Fahrzeuglängsrichtung aus dem Türausschnitt der jeweiligen Seitenwand ausweichen können, sondern vielmehr innerhalb desselben gehalten verbleiben und sich dort rückseitig an der B - bzw. Schloßsäule dann seitenwandversteifend abstützen können. Bolzen 119, 120 und zugehörige Fangelemente 121, 122 sind in jedem Fall aber so ausgestaltet, daß auch nach Verformung des Fahrerhauses und bei im Türausschnitt einer Seitenwand 6, 7 eingeklemmter Tür 8 bzw. 9 deren Öffnung möglich ist. Dieses wird vorzugsweise durch eine entsprechende Gestaltung des verriegelungsaktiven Bereiches der Verriegelungsbolzen 119, 120 und zugehörigen Fangorgane 121, 122 erreicht.

## Patentansprüche

1. Kippbares Fahrerhaus eines Frontlenker-Lastkraftwagen, das am Boden beiderseits eines Motortunnels Längsträger aufweist, über diese und eine vordere Lageranordnung schwenkbar am Fahrgestell-Rahmen angeschlossen sowie gegenüber diesem durch Federungselemente abgestützt ist, und dessen Frontwand, Rückwand, Seitenwände und Türen aus jeweils wenigstens einem äußeren und wenigstens einem mit diesem verbundenen inneren Blechpreßteil gebildet sind, dadurch gekennzeichnet, daß das Fahrerhaus unter Einschluß der Türen (8, 9) als Sicherheitszelle für Fahrer und Beifahrer ausgebildet ist, daß hierfür dessen Frontwand (3), Rückwand (12) und Seitenwände (6 ,7) gezielt verstärkt/versteift sind durch eine besondere preßtechnische Profilierung von deren Innen- und Außenblechen und durch zumindest partielle weitere Verstärkung dieser Versteifungsprofilbereiche mit zusätzlichen Versteifungsprofilleisten, wobei diese Versteifungen /Verstärkungen
a) in wenigstens drei verschiedenen Höhenlagen umlaufend, nämlich
- einer unteren (16) im Bereich des Fahrerhaus-Bodens (1),
- einer oberen (17) am Übergang zum Fahrerhaus-Dach (15),
- einer mittleren (18) im Bereich der Brüstungslinie unterhalb der Windschutzscheibe (4),
sowie
b) in mehreren Vertikalebenen, nämlich
- im Bereich der A- bzw. Scharniersäulen (19, 20),
- im Bereich der B- bzw. Schloßsäulen (21, 22),
- im Bereich der C-Säulen (23, 24), und
- wenigstens einer Säule (25) in der Rückwand
gegeben sowie untereinander an den Anschlußstellen teils fest, teils lösbar miteinander verbunden sind und so ein wandintegrales Versteifungsgerippe bilden, in das auch die Türen (8, 9) durch entsprechende Verstärkung im Bereich der mittleren Höhenlage (18) sowie der Boden (1) durch entsprechende Verstärkung und das Dach (15) durch entsprechende Randgestaltung einbezogen sind.

2. Kippbares Fahrerhaus nach Anspruch 1, dadurch gekennzeichnet, daß das Bodenblech (26) des Fahrerhaus-Bodens (1) in sich versteift ist durch beiderseits des Motortunnelbereiches (2) teils nach oben, teils nach unten vorspringend eingepreßte rinnenartige Längs- und Quersicken (27, 28, 29), und daß die Versteifung des Fahrerhauses im Bereich der unteren Höhenlage (16) durch entsprechende Profilierung der Frontwand-, Seitenwand- und Rückwand - Außen - und Innenbleche in Verbindung mit speziell profilierten, unten und/oder außen am Fahrerhaus-Boden (1) befestigten Bodenprofilträgern (41, 50) erfolgt, so daß sich unten im Bereich jeder Außenwand (3, 6, 7, 12) ein sich jeweils über die ganze Länge erstreckendes Hohlprofil (30) ergibt, das zumindest an kritischen Stellen durch ein- bzw. angebaute, durch Blechpreßteile realisierte Versteifungsprofilleisten (31, 32, 33) zusätzlich verstärkt ist.

3. Kippbares Fahrerhaus nach Anspruch 1, dadurch gekennzeichnet, daß dessen Versteifungen im Bereich der oberen Horizontalebene (17) durch entsprechende Profilierung der Frontwand-, Seitenwand- und Rückwand - Außen- und Innenbleche in Verbindung mit einer speziellen Randgestaltung des anzuschließenden Fahrerhaus-Daches (15) erfolgt, so daß sich oben im Bereich jeder Außenwand (3, 6, 7, 12) ein sich jeweils über die ganze Länge erstreckendes Hohlprofil (58) ergibt, das zumindest an kritischen Stellen durch einbzw. angebaute, durch Blechpreßteile realisierte Versteifungsprofilleisten (59, 60, 61) zusätzlich verstärkt ist.

4. Kippbares Fahrerhaus nach Anspruch 1, dadurch gekennzeichnet, daß dessen Versteifungen im Bereich der mittleren Horizontalebene (18) durch entsprechende Profilierung der Frontwand-, Seitenwand- und Rückwand - Außen- und Innenbleche sowie durch entsprechende Profilierung (73) des Türinnenbleches (66) in Verbindung mit einer aufgesetzten, zur Versteifung dienenden Blechpreßprofilleiste (67) erfolgt, so daß sich in der mittleren Horizontalebene des Fahrerhauses in jeder Außenwand sich über jeweils die ganze Länge erstreckendes Hohlprofil (68) ergibt, das auch in den Fahrerhaus-Wänden zumindest teilweise durch ein- bzw. angebaute, durch Blechpreßteile realisierte Versteifungsprofilleisten (69, 70, 71) verstärkt ist.

5. Kippbares Fahrerhaus nach Anspruch 2, dadurch gekennzeichnet, daß der Fahrerhaus-Boden (1) an seinem Bodenblech (26) vorne einen Vertikalflansch (34) aufweist, an dem das diesen mit einer unteren, nach vorn auswärts ausgepreßten Querversteifungssicke (35) überlappende Außenblech (36) der Fahrerhaus-Frontwand (3) angeschlossen ist, und daß das Innenblech (37) der Fahrerhaus-Frontwand (3) an seinem unteren Bereich weit nach innen vorspringend profiliert ist, in diesen Bereich eine nach vorne vorspringende, über die ganze Breite gehende Versteifungssicke (38) aufweist und mit einem unteren Querflansch (39) auf der Oberseite einer Quersicke (29) im Fahrerhaus-Boden (1) abgestützt befestigt ist, wobei dieser untere Bereich der Fahrerhaus-Frontwand (3) mit dem zugehörigen Bodenblech-Bereich ein geschlossenes Hohlprofil (30) bildet, in das zur weiteren Versteifung eine Versteifungsprofilleiste (33) mit U-T-Querschnitt eingebaut ist, die mit ihrem T-Kopfteil innenseitig am Außenblech (36) der Frontwand (3) angeschlossen ist und sich mit ihrem U-Fußteil zur Versteifungssicke (38) des Frontwand-Innenbleches (37) hin erstreckt, soweit, daß dazwischen ein größerer Spalt (40) zur Bildung einer im Crash-Fall initialenergieverzehrenden Verformungszone verbleibt.

6. Kippbares Fahrerhaus nach Anspruch 2, dadurch gekennzeichnet, daß am Bodenblech (26) des Fahrerhaus-Bodens (1) unten an dessen Längsaußenbereichen jeweils ein durch ein Blechpreßteil gebildeter Bodenprofilträger (41) mit einem oberen Flansch (42) angeschlossen ist, welcher Bodenprofilträger (41) zwei gegensinnig - eine nach außen und eine nach innen - vorspringende, sich über seine ganze Länge erstreckende Versteifungssicken (43, 44) und im untersten Bereich einen Vertikalflansch (45) aufweist, an dem das Seitenwand-Außenblech (45) unten abgestützt angeschlossen ist, wobei letzteres (45)
a) im Bereich des Türausschnittes zur Bildung derselben nach innen gezogen und dort zusammen mit dem Seitenwand-Innenblech (46) an einen Vertikalflansch (47) des Bodenbleches (26) angeschlossen ist, und
b) im Bereich hinter dem Türausschnitt an einer im Querschnitt Z-förmigen, durch ein Blechpreßteil gebildeten Distanzleiste (48) abgestützt befestigt ist, die ein Teil des Fahrerhaus-Bodens (1) bildet,
wodurch in diesem seitlichen unteren Fahrerhaus-Bereich ein von vorn nach hinten durchgehendes Hohlprofil (30) gebildet ist, in das zur weiteren Versteifung eine Versteifungsprofilleiste (31) eingebaut ist, die einen U-T-Querschnitt aufweist, mit ihrem T-Kopfbereich außenseitig am Bodenprofilträger (41) angeschlossen ist und sich mit ihrem U-Fußbereich zum Außenblech (45) der Fahrerhaus-Seitenwand (6, 7) hin erstreckt, soweit, daß dazwischen vorzugsweise ein größerer Spalt (49) zur Bildung einer im Crash-Fall initialenergieverzehrenden Verformungszone verbleibt.

7. Kippbares Fahrerhaus nach Anspruch 2, dadurch gekennzeichnet, daß am Bodenblech (26) des Fahrerhaus-Bodens (1) unten an seinem hinteren Endbereich ein durch ein Blechpreßteil gebildeter Bodenprofilträger (50) mit einem oberen Flansch (51) angeschlossen ist, welcher Bodenprofilträger (50) sich unter Überquerung des Motortunnels (2), dessen Kontur unten folgend über die ganze Fahrerhausbreite erstreckt und eine nach hinten außen vorspringende, sich über seine ganze Länge erstreckende Versteifungssicke (52) sowie im untersten Bereich einen Vertikalflansch (53) aufweist, an dem das Rückwand-Außenblech (54) unten abgestützt angeschlossen ist, wobei letzteres weiter oben in Höhe des Bodenbleches (26) an einer im Querschnitt Z-förmigen, durch ein Blechpreßteil gebildeten Distanzleiste (55) abgestützt ist, die ein Teil des Fahrerhaus-Bodens (1) bildet, wodurch in diesem hinteren unteren Fahrerhaus-Bereich ein quer durchgehendes Hohlprofil (30) gebildet ist, in das zur weiteren Versteifung eine Versteifungsprofilleiste (32) eingebaut sein kann, die einen U-T-Querschnitt aufweist, mit ihrem T-Kopfbereich außenseitig am Bodenprofilträger (50) angeschlossen ist und sich mit ihrem U-Fußbereich zum Außenblech (54) der Fahrerhaus-Rückwand (12) hin erstreckt, soweit, daß dazwischen vorzugsweise ein größerer Spalt (57) zur Bildung einer im Crash-Fall initialenergieverzehrenden Verformungszone verbleibt.

8. Kippbares Fahrerhaus nach Anspruch 3, dadurch gekennzeichnet, daß die Innenbleche (37, 46, 62) der Frontwand (3), Seitenwände (6, 7) und Rückwand (12) im Bereich der Hohlprofilbildung (58) der oberen Horizontalebene (17) jeweils eine zum Außenblech (35, 45, 54) hin gerichtete, einen größeren Abstand zur Bildung einer im Crash-Fall initialenergieverzehrenden Verformungszone freilassende Versteifungssicke (63, 64, 65) aufweisen, welche zumindest in den kritischen Bereichen von den zusätzlichen, vorzugsweise an den Innenblechen (37, 46, 62) angeschlossenen Versteifungsprofilleisten (59, 60, 61) mit Abstand übergriffen sind, die sich mit ihrem, dem Verformungsabfangen dienend ausgebildeten Querschnittsbereich in der Verformungszone und vorzugsweise ohne Kontakt zu den Innen- und Außenblechen erstrecken.

9. Kippbares Fahrerhaus nach Anspruch 4, dadurch gekennzeichnet, daß die Innenbleche (37, 46, 62) der Frontwand (3), Seitenwände (6, 7) und Rückwand (12) im Bereich der mittleren Höhenlage / Horizontalebene (18) zumindest teilweise eine zum Außenblech (35, 45, 54) hin gerichtete, vorzugsweise zumindest teilweise einen Spalt zur Bildung einer im Crash-Fall initialenergieverzehrenden Verformungszone freilassende Versteifungssicke (72) aufweisen, die mit gegebenenfalls in das Hohlprofil (68) eingebauten Versteifungsprofilleisten (69, 70, 71) im Crashfall funktionell zusammenwirken.

10. Kippbares Fahrerhaus nach Anspruch 1, dadurch gekennzeichnet, daß die A - bzw. Scharniersäulen (19, 20) durch hohlprofilige Ausgestaltung der Innen- und Außenbleche (45, 46) der Fahrerhaus-Seitenwände (6, 7) im eckseitigen Übergangsbereich zur Frontwand (3) gebildet sind, welche so hohlprofiligen Eckbereiche mittels eingebauter, durch Blechpreßteile realisierter Versteifungsprofilleisten (78) mit etwa U-T-Querschnitt verstärkt sind, wobei diese Versteifungsprofilleisten (78) vorzugsweise mit ihrem T-Kopfteil als Basis an den Innenblechen (46) der Seitenwände (6, 7) angeschlossen sowie mit ihren U-Fußteilen schräg nach außen vorn zu den Seitenwand-Außenblechen (45) hin gerichtet und mit letzterem zu deren Abstützung verbunden sind.

11. Kippbares Fahrerhaus nach Anspruch 1, dadurch gekennzeichnet, daß die B - bzw. Schloßsäulen (21, 22) im Anschluß an den Türausschnitt durch hohlprofilige Ausgestaltung der Innen- und Außenbleche (46, 45) der Fahrerhaus-Seitenwände (6, 7) gebildet sind, daß in dieses Hohlprofil innenseitig des den Türausschnitt begrenzenden Außenblech-Abschnittes eine durch ein Blechpreßteil mit U-T-Querschnitt realisierte Versteifungsprofilleiste (85) mit ihrem T-Kopfteil angeschlossen ist, die sich mit ihrem U-Fußteil in Richtung einer Fangrinne (86) am Seitenwand-Innenblech (46) erstreckt, jedoch zu dieser hin einen Spalt (87) zur Bildung einer im Crash-Fall initialenergieverzehrenden Verformungszone freiläßt.

12. Kippbares Fahrerhaus nach Anspruch 1, dadurch gekennzeichnet, daß die C-Säulen (23, 24) durch hohlprofilige Ausgestaltung (88, 89) der Innen- und Außenbleche (62, 54) im seitlichen vertikalen Randbereich der Fahrerhaus-Rückwand (12) gebildet sind, wobei das Rückwand-Innenblech (62) in diesen Bereichen jeweils eine weit nach vorn eingepreßte Rinne (90, 91) aufweist, deren Boden wiederum durch eine nach hinten vorspringende Versteifungssicke (92, 93) verstärkt ist, wobei außen an der Rinne (90, 91) beiderseits Flansche gegeben sind, an denen das Rückwand-Außenblech (54) abgestützt angeschlossen ist, dessen Randbereich durch einen Flansch (95) gebildet ist, an dem das diesen mit seinem hinteren Ende übergreifende Seitenwand-Außenblech (45) abgestützt angeschlossen ist, und wobei in das C-Säulen bildende Hohlprofil (88, 89) jeweils eine durch ein Blechpreßteil gebildete Versteifungsprofilleiste (96, 97) mit U-T-Querschnitt eingebaut ist, die mit ihrem T-Kopfteil vorzugsweise am Rückwand-Außenblech abgestützt befestigt ist, mit ihrem U-Fußteil zur Versteifungssicke (92, 93) des Rückwand-Innenbleches (62) hin gerichtet ist und dieser gegenüber vorzugsweise einen größeren Spalt (98, 99) zur Bildung einer im Crash-Fall initialenergieverzehrenden Verformungszone freiläßt.

13. Kippbares Fahrerhaus nach Anspruch 12, dadurch gekennzeichnet, daß das Seitenwand-Außenblech (45) im Bereich seitlich vor dem C-Säulen-bildenden Hohlprofil (88, 89) der Fahrerhaus-Rückwand (12) eine zu letzterem hin gerichtete, aber einen Spalt (100, 101) zur Bildung einer im Crash-Fall initialenergieverzehrenden Verformungszone freilassende, einwärts gepreßte Versteifungssicke (102, 103) aufweist.

14. Kippbares Fahrerhaus nach Anspruch 1, dadurch gekennzeichnet, daß zur Vertikal-Versteifung der Rückwand (12) wenigstens eine etwa mittig von unten nach oben durchgehende Säule (25) vorgesehen ist, gebildet durch entsprechend hohlprofilige Ausgestaltung der Innen- und Außenbleche (62, 54) in diesem Bereich, wofür das Außenblech (54) beiderseits eines mittleren Vertikalabschnittes (105) rinnenbildend mit Einschnürungen (106, 107) versehen und in das Innenblech (62) eine mit nach vorn gerichtete Versteifungsrinne (108) eingepreßt ist, welch letztere an ihrem Boden eine zum Außenblech-Abschnitt (105) hin gerichtete, vorzugsweise aber einen relativ großen Abstand zu dieser hin zur Bildung einer im Crash-Fall initialenergieverzehrenden Verformungszone freilassende Versteifungssicke (109) eingepreßt ist.

15. Kippbares Fahrerhaus nach den Ansprüchen 12 bis 14, dadurch gekennzeichnet, daß die Fahrerhaus-Rückwand (12) in Bereichen zwischen Mittel-Säule (25) und den C-Säulen (23, 24) ebenso wie die Seitenwände (6, 7) zwischen den B-Säulen (21, 22) und C-Säulen (23, 24) dann, wenn dort keine Fenster vorgesehen sind, durch knautschzonenbildende Beabstandung und vertikale, diagonale oder kreuzweise Versteifungsversickung ihrer Innen- und Außenbleche zusätzlich versteift ist.

16. Kippbares Fahrerhaus nach Anspruch 1, dadurch gekennzeichnet, daß das Fahrerhaus-Dach (15) randseitig versteift ist, vorzugsweise durch Vorsehen einer Wasserfangrinne (113) oder eines umlaufenden profilierten Wulstes, wobei dieser Dach-Versteifungsrand bei aufgesetztem Dach die im oberen Bereich der Frontwand (3), Seitenwände (6, 7) und Rückwand (12) gegebenen Verstärkungsmaßnahmen im funktionalen Zusammenwirken mit diesen ergänzt.

17. Kippbares Fahrerhaus nach einem oder mehreren der vorhergehenden Ansprüche, dadurch gekennzeichnet, daß den Türen (8, 9) zwecks Einbeziehung derselben in die Fahrerhaus-Sicherheitszelle Verriegelungssysteme zugeordnet sind, die bei Verformung des Fahrerhauses ein Halten und Verkeilen der Türen (8, 9) innerhalb ihrer Türausschnitte sicherstellen.

18. Kippbares Fahrerhaus nach Anspruch 17, dadurch gekennzeichnet, daß die Verriegelungssysteme durch preßtechnisch hergestellte Vorsprünge (115) und diesen räumlich zugeordnete, preßtechnisch hergestellte Fangvertiefungen (116) gebildet sind, wobei die Vorsprünge und Fangvertiefungen wahlweise entweder im zargenseitigen Bereich der Türinnenbleche (66) oder im türausschnittbegrenzenden Bereich des Außenbleches (45) der Seitenwand (6, 7) im A - bzw. Scharniersäulenbereich realisiert sein können.

19. Kippbares Fahrerhaus nach Anspruch 17, dadurch gekennzeichnet, daß die Verriegelungssysteme für die Türen (8, 9) zur B - bzw. Schloßsäule (21, 22) hin durch mit dem jeweiligen Türschloß (118) mechanisch oder elektromechanisch gekoppelte Verriegelungsbolzen (119, 120) im oberen und unteren Türbereich sowie zugeordnete Riegelfangorgane (121, 122) im Bereich der B - bzw. Schloßsäule (21, 22) der Seitenwand (6, 7) realisiert sind.

## Claims

1. Tilting cab of a forward-control truck, which cab has longitudinal members on the floor on either side of an engine tunnel and is attached to the chassis frame via said longitudinal members and front-mounted cab mounts in such a way that in can be slewed and is supported relative to said chassis frame by means of spring elements and that the front wall, rear wall, side walls and doors of said cab are each made from at least one outer and at least one inner sheet-metal pressing, the latter being connected to the former, characterised in that the cab with the inclusion of the doors (8, 9) is designed as a safety cell for driver and co-driver, that for this purpose the cab front wall (3), rear wall (12) and side walls (6, 7) are specifically reinforced/stiffened by means of a special sectional design of the inner and outer panels of said walls (3, 12, 6, 7), which special design is produced by means of pressing, and by means of at least partial further reinforcement of these stiffening sectional areas with the aid of additional reinforcing sectional elements, these stiffenings/reinforcements being provided
a) as circumferential at at least three different horizontal levels, ie
• at a lower (16) level in the area of the cab floor (1),
• at an upper (17) level at the transition from the cab to the roof (15),
• at a central (18) level in the area of the chord line below the windscreen (4),
and
b) in several vertical planes, ie
• in the area of the A or hinge posts (19, 20),
• in the area of the B or lock posts (21, 22)
• in the area of the C posts (23, 24), and
• at at least one post (25) in the rear wall
and being connected with one another at the connection points in a partially permanent, partially detachable manner and thus forming a wall-integral reinforcing skeleton that integrates also the doors (8, 9) by means of suitable reinforcements in the area of the central horizontal level (18) and the floor (1) by means of a suitable reinforcement and the roof (15) by means of a suitable design of the edge.

2. Tilting cab according to Claim 1, characterised in that the floor panel (26) of the cab floor (1) is in itself reinforced by partially upward and partially downward protruding, pressed-in, channel-like longitudinal and transverse beads (27, 28, 29) located on both sides of the engine tunnel area (2), and that the reinforcement of the cab in the area of the lower vertical level (16) is effected by suitable sectional design of the outer and inner panels of the front, side and rear walls in connection with specially designed floor sectional carriers (41, 50) attached to the bottom and/or to the outside of the cab floor (1), so that at the bottom, in the area of each outer wall (3, 6, 7, 12), there is a hollow section (30) extending in each case over the entire length, which hollow section is additionally reinforced at least at critical points by the installation or attachment of reinforcing sectional elements (31, 32, 33) made from sheet-metal pressings.

3. Tilting cab according to Claim 1, characterised in that its reinforcements m the area of the upper horizontal level (17) are effected by suitable sectional design of the outer and inner panels of the front, side, and rear walls in connection with a special design of the edge of the cab roof (15) to be attached, so that at the top in the area of each outer wall (3, 6, 7, 12) there is a hollow section (58) extending in each case over the entire length and being additionally reinforced at least at critical points by the installation or attachment of reinforcing sectional elements (59, 60, 61) made from sheet-metal pressings.

4. Tilting cab according to Claim 1, characterised in that its stiffenings in the area of the central horizontal level (18) are effected by the suitable sectional design of the outer and inner panels of the front, side, and rear walls as well as by the suitable sectional design (73) of the door inner panel in connection with a sheet-metal sectional element (67) superimposed for reinforcement purposes, so that at the central horizontal level of the cab there is a hollow section (68) in each outer wall, which hollow section (68) extends in each case over the entire length and is at least partially reinforced by the installation or attachment of reinforcing sectional elements (69, 70, 71) made from sheet-metal pressings.

5. Tilting cab according to Claim 2, characterised in that the cab floor (1) has a vertical flange (34) attached to the front of its floor panel (26), to which vertical flange the outer panel (36) of the cab front wall (3) is connected and overlaps said flange (34) by means of a lower transverse reinforcing bead (35) pressed out forwards and outwards, and that the inner panel (37) of the cab front wall (3) is sectionally designed in its lower area in a far inward protruding manner and has a reinforcing bead (38) in this area, which bead protrudes forwards and extends over the entire width, and that said inner panel (37) is fastened to and supported on the cab floor (1) by means of a lower transverse flange (39) on the upper side of a transverse bead (29), this lower area of the cab front wall (3) forming a closed hollow section (30) together with the associated floor panel area, in which hollow section (30) a reinforcing sectional element (33) of U-T-shaped cross section is installed for further reinforcement and is, with its T-shaped head part, connected to the inside of the outer panel (36) of the front wall (3) and extends with its U-shaped foot part so far towards the reinforcing bead (38) of the front-wall inner panel (37) that a fairly large gap (40) remains in between for forming a deformation zone which absorbs initial energy in the event of a crash.

6. Tilting cab according to Claim 2, characterised in that on the floor panel (26) of the cab floor (1) a floor sectional carrier (41) made from a sheet-metal pressing is, together with an upper flange (42), connected to the underside of the longitudinal outer areas of said floor panel (26), which floor sectional carrier (41) has two reinforcing beads (43, 44) that protrude in opposite directions - one outwards and one inwards - and extend over the entire length of said carrier (41) and which carrier (41) has a vertical flange (45) in the lowermost area, to and on which flange the side-wall outer panel (45) is connected and supported at the bottom, whereby
a) in the area of the door cutout the side-wall outer panel (45) is drawn inwards where it is, together with the side-wall inner panel (46), connected to a vertical flange (47) of the floor panel (26) in order to form said reinforcing beads (43, 44), and
b) in the area behind the door cutout the side-wall outer panel (45) is supported on and connected to a spacer element (48) made from a sheet-metal pressing and of Z-shaped cross section, which spacer element forms part of the cab floor (1), a continuous hollow section (30) being formed in this lateral lower cab area and extending from the front to the rear, in which hollow section (30) a reinforcing sectional element (31) of U-T-shaped cross section is installed for further reinforcement, which reinforcing sectional element (31) is, with its T-shaped head area, connected to the outside of the floor sectional carrier (41) and extends with its U-shaped foot part so far towards the outer panel (45) of the cab side wall (6, 7) that preferably a fairly large gap (49) remains in between for forming a deformation zone which absorbs initial energy in the event of a crash.

7. Tilting cab according to Claim 2, characterised in that a floor sectional carrier (50) made from a sheet-metal pressing and provided with an upper flange (51) is connected to the underside of the rear end area of the floor panel (26) of the cab floor (1), which floor sectional carrier (50) extends over the engine tunnel (2), whose lower contour it follows, and across the whole cab width, and is provided with a reinforcing bead (52) protruding rearwards on the outside and extending over the entire cab length and is provided with a vertical flange (53) in the lowermost area, on and to which the rear-wall outer panel (54) is supported and connected at the bottom, said outer panel (54) being supported, further up at the height of the floor panel (26), on a spacer element (55) of Z-shaped cross section and made from a sheet-metal pressing, which spacer element (55) forms part of the cab floor (1), a transverse continuous hollow section (30) thereby being formed in this rear lower cab area, in which hollow section (30) a reinforcing sectional element (32) of U-T-shaped cross section can be installed for further reinforcement, which reinforcing sectional element (32) is, with its T-shaped head area, connected to the outside of the floor sectional carrier (50) and extends with its U-shaped foot part so far towards the outer panel (54) of the cab rear wall (12) that preferably a fairly large gap (57) remains in between for forming a deformation zone which absorbs initial energy in the event of a crash.

8. Tilting cab according to Claim 3, characterised in that in the area of the hollow section (58) formed at the upper horizontal level (17) the inner panels (37, 46, 62) of the front wall (3), side walls (6, 7) and rear wall (12) have in each case a reinforcing bead (63, 64, 65) pointing towards the outer panel (35, 45, 54) and leaving a fairly large gap for forming a deformation zone which absorbs initial energy in the event of a crash, which reinforcing beads (63, 64, 65) are, at least in the critical areas, overlapped at a distance by the additional reinforcing sectional elements (59, 60, 61) preferably connected to the inner panels (37, 46, 62), which additional reinforcing sectional elements (59, 60, 61), having a cross-section area designed to counter deformation, extend in the deformation zone and preferably without contact to the inner and outer panels.

9. Tilting cab according to Claim 4, characterised in that in the area of the central height level/horizontal plane (18) the inner panels (37, 46, 62) of the front wall (3), side walls (6, 7) and rear wall (12) have a reinforcing bead (72) which partially points towards the outer panel (35, 45, 54) and preferably, but at least partially, leaves a gap for forming a deformation zone which absorbs initial energy in the event of a crash, which reinforcing bead (72) acts functionally in the event of a crash together with any reinforcing section elements (69, 70, 71) if integrated in the hollow section (68).

10. Tilting cab according to Claim 1, characterised in that in the corner transition area to the front wall (3) the A or hinge posts (19, 20) are formed by the hollow sectional design of the inner and outer panels (45, 46) of the cab side walls (6, 7), which hollow-section corner areas are reinforced by means of integrated reinforcing sectional elements (78) of approximately U-T-shaped cross section, made from sheet-metal pressings, connected, preferably with their T-shaped head part as basis, to the inner panels (46) of the side walls (6, 7) and pointing with their U-shaped foot parts obliquely outwards and forwards to the side-wall outer panels (45) to which they are connected for their support.

11. Tilting cab according to Claim 1, characterised in that the B or lock posts (21, 22) following the door cutout are formed by the hollow sectional design of the inner and outer panels (45, 46) of the cab side walls (6, 7), that in this hollow section a reinforcing sectional element (85) made from a sheet-metal pressing of U-T cross-section is, with its T-shaped head part, connected to the inside of the outer-panel section limiting the door cutout and extends with its U-shaped foot part in the direction of a retaining channel (86) on the side-wall inner panel (46), but leaving a gap (87) towards said retaining channel (86) for forming a deformation zone which absorbs initial energy in the event of a crash.

12. Tilting cab according to Claim 1, characterised in that the C posts (23, 24) are formed by the hollow sectional design (88, 89) of the inner and outer panels (62, 54) in the lateral vertical edge area of the cab rear wall (12), the rear-wall inner panel (62) having in each case a channel (90, 91) pressed in far forwards in this area, the bottom of which channel is in turn reinforced by means of a reinforcing bead (92, 93) protruding rearwards, flanges being provided on both outer sides of said channel (90, 91), on and to which flanges the rear-wall outer panel (54) is supported and connected, whose edge area is formed by a flange (95) on and to which the side-wall outer panel (45) overlapping the rear end of said flange (95) is supported and connected, a reinforcing sectional element (96, 97) of U-T-shaped cross section and made from a sheet-metal pressing being installed in each hollow section (88, 89) forming the C posts, which reinforcing sectional element (96, 97) is, with its T-shaped head part, supported on and connected preferably to the rear-wall outer panel, and points, with its U-shaped foot part, towards the reinforcing bead (92, 93) of the rear-wall inner panel (62), leaving preferably a fairly large gap (98, 99) for forming a deformation zone which absorbs initial energy in the event of a crash, said gap facing the reinforcing bead (92, 93).

13. Tilting cab according to Claim 12, characterised in that the side-wall outer panel (45) in the area before the C-post-forming hollow section (88, 89) of the cab rear wall (12) has a reinforcing bead (102, 103) pressed inwards and extending towards said hollow section (88, 89) but leaving a gap (100, 101) for forming a deformation zone which absorbs initial energy in the event of a crash.

14. Tilting cab according to Claim 1, characterised in that at least one approximately centrally located post (25) which is continuous from the bottom to the top is provided for the vertical reinforcement of the rear wall (12) and formed by suitable hollow sectional design of the inner and outer panels (62, 54) in this area, for which purpose the outer panel (54) is, on both sides of a central vertical portion (105), is channelled with constrictions (106, 107) and that a forward-facing reinforcing channel (108) is pressed into the inner panel (62), which channel (108) is, at its bottom, provided with a reinforcing bead (109) pointing towards the outer panel portion (105), but preferably leaving a relatively large gap relative to said portion for forming a deformation zone which absorbs initial energy in the event of a crash.

15. Tilting cab according to Claims 12 to 14, characterised in that the cab rear wall (12) in the areas between centre post (25) and the C posts (23, 24) and also the side walls (6, 7) between the B posts (21, 22) and the C posts (23, 24) are, if no windows are provided there, additionally reinforced by means of crash-crumple-zone-forming spaces between and vertical, diagonal or cross-type reinforcing beads on their inner and outer panels.

16. Tilting cab according to Claim 1, characterised in that the cab roof (16) is reinforced on its edges, preferably by the provision of a water-retaining channel (113) or a circumferential bead of sectional design, said roof reinforcing edge supplementing the reinforcement measures taken in the upper area of the front wall (3), side walls (6, 7) and rear wall (12) and functionally interacting with them when the roof has been mounted.

17. Tilting cab according to one or several of the aforementioned Claims, characterised in that the locking systems are allocated to the doors (8, 9) to integrate these in the cab safety cell and will retain the doors and wedge them tight within their door cutouts in the event of deformation of the cab.

18. Tilting cab according to Claim 17, characterised in that the locking systems are made by means of protrusions (115) made by pressing and by means of retaining recesses (116) spatially allocated to said protrusions (115) and made by pressing, the protrusions and retaining recesses can be optionally realised either in the shroud area of the door inner panels (66) or in the door-cutout-limiting area of the outer panel (45) of the side wall (6, 7) in the A or hinge-post area.

19. Tilting cab according to Claim 17, characterised in that the locking systems for the doors (8, 9) towards the B and lock posts (21, 22) are provided with locking bolts (119, 120) in the upper and lower door areas, which bolts are mechanically or electromechanically coupled with the respective door lock (118) and that said locking systems are also provided with allocated latch retaining organs (121, 122) in the area of the B or lock posts (21, 22) of the side wall (6, 7).

## Revendications

1. Cabine basculante d'un camion à cabine avancée ayant sur son plancher des supports longitudinaux de part et d'autre du tunnel du moteur, par lesquels la cabine est reliée de manière pivotante au châssis du véhicule par l'intermédiaire d'un dispositif de palier avant, et s'appuie par rapport au châssis par l'intermédiaire d'éléments de suspension, cabine dont la paroi avant, la paroi arrière, les parois latérales et les portes, sont formées chaque fois d'au moins une tôle matricée extérieure et d'au moins une tôle matricée intérieure reliée à celle-ci,
caractérisée en ce que
la cabine, y compris les portes (8, 9), est réalisée comme cellule de sécurité pour le conducteur et le passager et pour cela sa paroi frontale (3), sa paroi arrière (12), ses parois latérales (6, 7) sont intentionnellement rigidifiées/renforcées par un profilage matricé particulier des tôles intérieure et extérieure et par au moins un autre renforcement de ces zones de profil de rigidification avec des longerons profilés de rigidification supplémentaires, les renforcements/rigidifications étant réalisés
a) dans au moins trois niveaux de hauteur différents de manière périphérique, à savoir
- un niveau inférieur (16) dans la zone du plancher (1) de la cabine,
- un niveau supérieur (17) à la jonction entre la cabine et le toit (15),
- une zone à mi-hauteur (18) au niveau de la ligne passant en dessous du pare-brise (4),
ainsi que
b) dans plusieurs plans verticaux, à savoir
- dans la zone des colonnes A ou colonnes de charnière (19, 20),
- dans la zone des colonnes B ou colonnes de serrure (21, 22),
- dans la zone des colonnes C (23, 24) et
- dans au moins une colonne (25) de la paroi arrière,
et ces renforcements sont reliés entre eux en des points de jonction en partie de manière solidaire et en partie de manière amovible et constituent ainsi une ossature de rigidification intégrée à la paroi, dans laquelle également les portes (8, 9) sont intégrées par des renforcements correspondants dans la zone du niveau à mi-hauteur (18) ainsi qu'au niveau du plancher (1) par des renforcements correspondants et le toit (15) par une forme appropriée donnée à son bord.

2. Cabine basculante selon la revendication 1,
caractérisée en ce que
la tôle (26) du plancher (1) de la cabine est rigidifiée en elle-même par des nervures transversales et longitudinales en forme de goulottes (27, 28, 29) pressées de part et d'autre de la zone du tunnel (2) du moteur, en partie vers le haut, en partie vers le bas, et
la rigidification de la cabine dans la zone du niveau inférieur (16) est réalisée par un profilage approprié des tôles de la paroi avant, des parois latérales et de la paroi arrière, pour les tôles extérieures et les tôles intérieures, en combinaison avec des supports de profilés de plancher (41, 50) profilés de manière particulière, et qui sont fixés en dessous et/ou à l'extérieur du plancher (1) de la cabine pour qu'au niveau de chaque paroi extérieure (3, 6, 7, 12) on obtienne chaque fois un profilé creux (30) s'étendant sur toute la longueur et qui est renforcé de manière complémentaire au moins aux endroits critiques par des profilés de rigidification (31, 32, 33) réalisés sous la forme de pièces en tôle matricée, et qui sont intégrés ou rapportés.

3. Cabine basculante selon la revendication 1, caractérisée en ce qu'
au niveau de ses rigidifications dans la zone du niveau horizontal supérieur (17) par un profilage correspondant des tôles extérieure et intérieure de la paroi avant des parois latérales et de la paroi arrière, en liaison avec une mise en forme particulière du bord du toit (15) de la cabine, ainsi raccordé, pour qu'au dessus au niveau de chaque paroi extérieure (3, 6, 7, 12) on obtienne un profilé creux (58) qui s'étend chaque fois sur toute la longueur, et qui est renforcé de manière complémentaire au moins aux endroits critiques par des longerons profilés de rigidification (59, 60, 61) réalisés sous la forme de pièces en tôle pressée, intégrées ou rapportées aux endroits critiques.

4. Cabine basculante selon la revendication 1,
caractérisée en ce que
ses rigidifications au niveau du plan horizontal (18) à mihauteur sont assurées par un profilage correspondant de la tôle extérieure et de la tôle intérieure de la paroi frontale, des parois latérales et de la paroi arrière ainsi que par un profilage correspondant (73) de la tôle intérieure (66) des portes en liaison avec un longeron profilé (67) constitué par une tôle matricée servant à rigidifier et qui est rapporté, de façon que dans le plan horizontal médian de la cabine, au niveau de chaque paroi extérieure, on obtienne un profilé creux (68) s'étendant chaque fois sur toute la longueur, et que les parois de la cabine soient également renforcées par des longerons profilés de rigidification (69, 70, 71) sur la forme de pièces en tôle matricée, et qui sont au moins partiellement intégrés ou rapportés.

5. Cabine basculante selon la revendication 2,
caractérisée en ce que
le plancher (1) de la cabine comporte au niveau de sa tôle (26) formant le plancher, à l'avant, une bride verticale (34) à laquelle est reliée, par une nervure de rigidification transversale (35) déformée vers l'avant et vers l'extérieur, une tôle extérieure (36) qui chevauche et appartient à la paroi frontale (3) de la cabine et en ce que la tôle intérieure (37) de la paroi frontale (3) de la cabine est profilée vers l'intérieur, en saillie, loin sous sa zone inférieure et dans cette zone elle comporte une nervure de rigidification (38) en saillie vers l'avant et s'étendant sur toute la largeur et est fixée en appui sur le plancher (1) de la cabine avec une bride transversale inférieure (39) ayant sur son côté supérieur une nervure transversale (29), cette paroi avant (3) de la cabine, au niveau de sa zone inférieure, forme avec la zone de tôle de plancher correspondante, un profilé creux (30) fermé dans lequel est intégré, en vue de rigidifier encore plus, un longeron profilé de rigidification (33) à section U-T, dont la partie de tête T est reliée du côté intérieur à la tôle extérieure (36) de la paroi avant (3) et s'étend par sa partie de pied en forme de U vers la nervure de rigidification (38) de la tôle intérieure (37) de la paroi frontale, de manière accentuée mais en laissant un intervalle important (40) pour former une zone de déformation dissipant l'énergie initiale en cas de choc.

6. Cabine basculante selon la revendication 2,
caractérisée en ce qu'
au niveau de la tôle (26) formant le plancher (1) de la cabine, en partie inférieure, dans les zones de cette tôle, extérieures, selon le sens de la longueur, est relié un support de profilé de sol (41) formé par une pièce en tôle pressée à une bride supérieure (42), et le support de profilé de plancher (41) comporte deux nervures de rigidification (43, 44), en saillie, en direction opposée, l'une vers l'extérieur, l'autre vers l'intérieur, et s'étendant sur toute la longueur et dans la zone la plus en bas reçoit une bride verticale (45), contre laquelle s'appuie en partie basse la tôle extérieure (45) de la paroi latérale en y étant reliée et cette tôle (45)
a) est reliée au niveau de la découpe de porte pour former celle-ci, vers l'intérieur, en y étant réunie à la tôle intérieure (46) de la paroi latérale, au niveau d'une bride verticale (47) de la tôle (26) formant le plancher et
b) dans la zone derrière la découpe de porte cette tôle est fixée en appui à un longeron d'écartement (48) formé par une pièce en tôle pressée et ayant une section en forme de Z, ce longeron faisant partie du plancher (1) de la cabine,
et dans cette zone latérale inférieure de la cabine il est formé un profilé creux (30) continu de l'avant vers l'arrière dans lequel est intégré, pour compléter la rigidification, un longeron profilé de rigidification (31) ayant une section en forme de U-T, dont la zone de tête T est reliée du côté extérieur au support de profilé de plancher (41) et dont la zone de pied en forme de U s'étend en direction de la tôle extérieure (45) de la paroi latérale (6, 7) de la cabine et pénètre pour laisser un intervalle (49), de préférence relativement grand, pour former une zone de déformation absorbant l'énergie initiale en cas de choc.

7. Cabine basculante selon la revendication 2,
caractérisée en ce que
pour la tôle (26) constituant le plancher (1) de la cabine, sa zone d'extrémité arrière est reliée à une bride supérieure (51) par un support profilé (50), de plancher, formé par une pièce en tôle pressée, ce support profilé (50) passant le tunnel (2) du moteur en suivant son contour, et en s'étendant sur toute la largeur de la cabine avec une nervure de renforcement (52), en saillie vers l'extérieur et vers l'arrière et s'étendant sur toute sa longueur, et dans la zone la plus basse il est prévu une bride verticale (53) contre laquelle est reliée en appui, dans sa partie inférieure, la zone extérieure (54) de la paroi arrière, et celle-ci est soutenue plus haut, au niveau de la tôle de plancher (26), par un longeron d'écartement (55) formé par une pièce en tôle pressée, ayant une section en forme de Z, cette pièce faisant partie du plancher (1) de la cabine, en formant ainsi un profil creux (30), traversant transversalement, dans cette zone arrière inférieure de la cabine, profilé dans lequel peut être intégré, pour renforcer la rigidité, un longeron profilé de rigidification (32) à section en U-T dont la zone de tête en forme de T est reliée du côté extérieur au support profilé (50) du plancher et dont la zone de pied U s'étend vers la tôle extérieure (54) de la paroi arrière (12) de la cabine pour laisser un intervalle important (57) constituant une zone de déformation absorbant l'énergie initiale en cas de choc.

8. Cabine basculante selon la revendication 3,
caractérisée en ce que
les tôles intérieures (37, 46, 62) de la paroi frontale (3), des parois latérales (6, 7) et de la paroi arrière (12) comportent, au niveau de la formation du profilé creux (58) du plan horizontal supérieur (17), une nervure de rigidification (63, 64, 65) dirigée chaque fois vers la tôle extérieure (35, 45, 54) et laissant un intervalle important constituant une zone de déformation dissipant l'énergie initiale en cas de choc, ces nervures étant entourées, au moins dans les zones critiques, des longerons profilés de rigidification (59, 60, 61) supplémentaires, reliés de préférence aux tôles intérieures (37, 46, 62), l'entourage se faisant en laissant un intervalle, et ces longerons s'étendent avec leur zone de section transversale réalisée pour servir à absorber les déformations, dans la zone de déformation et de préférence sans contact avec les tôles intérieures et les tôles extérieures.

9. Cabine basculante selon la revendication 4,
caractérisée en ce que
les tôles intérieures (37, 46, 62) de la paroi avant (3), des parois latérales (6, 7) et de la paroi arrière (12) comportent dans la zone du niveau de hauteur médian/plan horizontal (18), au moins une nervure de rigidification (72) dirigée vers la tôle extérieure (35, 45, 54) en laissant de préférence au moins en partie un intervalle pour constituer une zone de déformation absorbant l'énergie initiale en cas de choc, et qui coopère le cas échéant fonctionnellement, en cas de choc, avec les longerons profilés de rigidification (69, 70, 71) également intégrés dans le profilé creux (68).

10. Cabine basculante selon la revendication 1,
caractérisée en ce que
les colonnes A ou colonnes de charnière (19, 20) sont formées par des développements en profilés creux des tôles intérieure et extérieure (45, 46) des parois latérales (6, 7) de la cabine, dans la zone transitoire au niveau des coins avec la paroi frontale (3), les zones de coin, profilées en creux, sont renforcées à l'aide de longerons profilés de rigidification (78) constitués par des pièces en tôle pressée et ayant sensiblement une section en U-T, ces longerons profilés de rigidification (78) étant raccordés, de préférence par leur partie de tête en T comme base, aux tôles intérieures (46) des parois latérales (6, 7) ainsi qu'avec leur partie de pied en forme de U, ils sont dirigés en biais vers l'extérieur et vers l'avant en direction des tôles extérieures de la paroi latérale (45) en étant reliés avec celle-ci pour servir d'appui.

11. Cabine basculante selon la revendication 1,
caractérisée en ce que
les colonnes B ou colonnes de serrure (21, 22) sont formées en liaison avec les découpages de porte par une réalisation profilée creuse des tôles intérieure et extérieure (46, 45) des parois latérales (6, 7) de la cabine et ce profilé creux est relié du côté intérieur de la découpe de la tôle extérieure délimitant la découpe de porte, à la partie de tête en forme de T d'un longeron profilé de rigidification (85) constitué par une pièce en tôle pressée à section U-T, et sa partie de pied en forme de U s'étend dans la direction d'une gouttière (86) contre la tôle intérieure (46) de la paroi latérale, en laissant toutefois par rapport à celle-ci un intervalle (87) constituant une zone de déformation dissipant l'énergie initiale en cas de choc.

12. Cabine basculante selon la revendication 1,
caractérisée en ce que
les colonnes C (23, 24) sont constituées par une mise en forme (88, 89) de profilés creux des tôles intérieure et extérieure (62, 54) dans la zone de bord vertical latéral de la paroi arrière (12) de la cabine, la tôle intérieure (62) de la paroi arrière ayant dans ses zones, chaque fois une gorge (90, 91) enfoncée loin vers la partie avant, et dont le fond est lui-même renforcé par une nervure de rigidification (92, 93) en saillie vers l'arrière, et à l'extérieur de la goulotte (90, 91), il y a de part et d'autre des brides contre lesquelles est reliée en appui la tôle extérieure (54) de la paroi arrière et dont la zone marginale est formée par une bride (95), à laquelle est reliée en appui la tôle extérieure (45) de la paroi latérale qui déborde par son extrémité arrière, et dans le profilé creux (88, 89) formant les colonnes C, est intégré chaque fois un longeron profilé de rigidification (96, 97) constitué par une pièce en tôle pressée et ayant une section U-T dont la tête T est fixée de préférence en appui contre la tôle extérieure de la paroi arrière, et dont la partie de pied en forme de U est dirigée vers la nervure de rigidification (92, 93) de la tôle intérieure de la paroi arrière (62) et qui laisse par rapport à celle-ci un intervalle important (98, 99) pour constituer une zone de déformation dissipant l'énergie initiale en cas de choc.

13. Cabine basculante selon la revendication 12,
caractérisée en ce que
la tôle extérieure (45) de la paroi latérale comporte, dans la zone latérale, devant le profilé creux (88, 89) formant les colonnes en C de la paroi arrière (12) de la cabine, une nervure de rigidification (102, 103) pressée vers l'intérieur, dirigée vers ce profilé creux mais laissant un intervalle (100, 101) pour constituer une zone de déformation dissipant l'énergie initiale en cas de choc.

14. Cabine basculante selon la revendication 1,
caractérisée en ce que
pour la rigidification verticale de la paroi arrière (12) il est prévu au moins une colonne (25) traversant de bas en haut, située sensiblement au milieu, et qui, par une mise en forme, profilée creuse, correspondante des tôles intérieure et extérieure (62, 54), est prévue dans cette zone et à cet effet la tôle extérieure (54) est munie de part et d'autre d'un segment vertical médian (105), de parties rétrécies (106, 107) formant des goulottes, et une nervure de rigidification (108) dirigée vers l'avant est pressée dans la tôle intérieure (62), cette nervure étant munie d'une nervure de rigidification (109), pressée, dirigée vers le fond, en direction d'un segment de tôle extérieur (105), mais en laissant de préférence un intervalle relativement important par rapport à celui-ci pour constituer une zone de déformation dissipant l'énergie initiale en cas de choc.

15. Cabine basculante selon les revendications 12 à 14,
caractérisée en ce que
la paroi arrière (12) de la cabine, comporte dans les zones entre la colonne médiane (25) et les colonnes en C (23, 24) de même que les parois latérales (6, 7) entre les colonnes B (21, 22) et les colonnes C (23, 24), lorsqu'il n'y est pas prévu de lunette, par formation de zones de déformation, de moyens d'écartement et des nervures de rigidification verticales, en diagonale ou en croix, renforçant de manière complémentaire les tôles intérieure et extérieure.

16. Cabine basculante selon la revendication 1,
caractérisée en ce que
le toit (15) de la cabine est rigidifié du côté du bord, de préférence par une goulotte de réception d'eau (113) ou un bourrelet profilé périphérique, ce bord de rigidification du toit, lorsque le toit est mis en place, coopère avec ce bourrelet dans la zone supérieure de la paroi frontale (3), les parois latérales (6, 7) et la paroi arrière (12) en constituant des moyens de renforcement.

17. Cabine basculante selon l'une ou plusieurs des revendications précédentes,
caractérisée en ce que
les portes (8, 9) sont intégrées dans le système de verrouillage de la cellule de sécurité constituée par la cabine et en cas de déformation de la cabine, les portes (8, 9) sont maintenues et coincées dans leur découpe.

18. Cabine basculante selon la revendication 17,
caractérisée en ce que
les systèmes de verrouillage sont formés par des saillies (115) fabriquées par pressage et ces cavités de réception (116) (gâches) fabriquées par pressage et qui leur sont associées, les parties en saillie et les cavités de réception pouvant être réalisées au choix soit dans la zone de feuillure de la tôle intérieure de porte (66) soit dans la zone délimitant la découpe de porte dans la tôle extérieure (45) de la paroi latérale (6, 7), dans la zone des colonnes A ou colonnes de charnières.

19. Cabine basculante selon la revendication 17,
caractérisée en ce que
les systèmes de verrouillage des portes (8, 9) sont réalisés en direction des colonnes B ou colonnes de serrure (21, 22) par des goujons de verrouillage (119, 120) couplés mécaniquement ou électromécaniquement à chaque serrure de porte (118) dans la zone supérieure et la zone inférieure de la porte ainsi que des organes d'accrochage des verrous (gâches) (121, 122) associés au niveau des colonnes B ou colonnes de serrure (21, 22) de la paroi latérale (6, 7).
